# EUROPEAN PATENT APPLICATION

(11) **EP 4 270 013 A1**
(43) Date of publication of application: **01.11.2023**
(21) Application number: 23170012.1
(22) Date of filing: 26.04.2023
(51) Int. Cl.: G01N 35/02, G01N 35/04, G01N 35/00

(54) **SPECIMEN RACK TRANSPORT DEVICE, ANALYZER INCLUDING SAME, AND METHOD FOR COLLECTING SPECIMEN SPILLED FROM SPECIMEN CONTAINER**

(30) Priority: 28.04.2022 JP 2022075083
(71) Applicant: SYSMEX CORPORATION, Kobe-shi Hyogo 651-0073 (JP)
(72) Inventor: Masutani, Kouichi, Kobe-shi, Hyogo, 651-0073 (JP)
(74) Representative: Hoffmann Eitle

(57) **Abstract**

Disclosed is a specimen rack transport device comprising: a transport mechanism configured to transport, on a placement surface, a specimen rack holding a specimen container; a flow path member configured to receive a specimen spilled from the specimen container onto the placement surface and cause the specimen to flow through the flow path member; and a collecting container configured to collect the specimen having flowed through the flow path member.

## Description

### CROSS REFERENCE TO RELATED APPLICATIONS

This application claims priority from prior Japanese Patent Application No. 2022-075083, filed on April 28, 2022, entitled "SPECIMEN RACK TRANSPORT DEVICE, ANALYZER INCLUDING SAME, AND METHOD FOR COLLECTING SPECIMEN SPILLED FROM SPECIMEN CONTAINER", the entire content of which is incorporated herein by reference.

### FIELD OF THE INVENTION

The present invention relates to a specimen rack transport device, an analyzer including the same, and a method for collecting a specimen spilled from a specimen container.

### BACKGROUND OF THE INVENTION

Japanese Laid-Open Patent Publication No. 2006-208286 discloses a specimen rack transport device that is provided to an analyzer. The specimen rack transport device is composed of: a transport mechanism part which transports a specimen rack; a controller which controls operation of the transport mechanism part; a housing in which these are held; and the like. The housing has an upper portion that is partially recessed. In the recessed portion, a start stocking portion for stocking a plurality of pre-analysis specimen racks, a transport path through which each of the specimen racks is transported to a position for supply to the analyzer, and an end stocking portion for stocking a post-analysis specimen rack, are formed. The transport mechanism part is disposed below the start stocking portion, the transport path, and the end stocking portion. An intermediate plate is disposed immediately below the transport mechanism part, and a control box storing therein the controller is disposed immediately below the intermediate plate so as not to protrude outward of the intermediate plate. Edges of the intermediate plate are bent upward so that the intermediate plate is formed into a recessed shape. For example, in a case where a specimen is analyzed by using an uncapped specimen container, an operator might suddenly overturn a specimen rack when setting the specimen rack on the start stocking portion. In this case, the specimen is spilled from the specimen container on the specimen rack and might enter the housing. However, the specimen having been spilled is received by the intermediate plate, and thus the specimen is prevented from reaching the controller provided inside the control box.

In the specimen rack transport device described in Japanese Laid-Open Patent Publication No. 2006-208286, if a specimen is spilled from a specimen container, the specimen having entered the housing might reach the intermediate plate through components inside the housing. In this case, an enormous amount of work load is required to clean the components on which the specimen has adhered.

The present invention has been made in consideration of the above circumstances, and an object of the present invention is to provide a specimen rack transport device, an analyzer including the same, and a method for collecting a specimen spilled from a specimen container that enable reduction of work load for cleaning that becomes necessary upon spilling of the specimen from the specimen container.

### SUMMARY OF THE INVENTION

According to the present invention, a specimen rack transport device is provided. The specimen rack transport device (200) includes: a transport mechanism (2000) configured to transport, on a placement surface (202p), a specimen rack (R) holding a specimen container (C); a flow path member (241 to 247, 240x, 240y, 341 to 344) configured to receive a specimen spilled from the specimen container onto the placement surface and cause the specimen to flow through the flow path member; and a collecting container (250) configured to collect the specimen having flowed through the flow path member.

In this configuration, even if a specimen is spilled from a specimen container onto the placement surface, the specimen flows through the flow path member and is collected in the collecting container. Consequently, work load for cleaning that becomes necessary upon spilling of the specimen from the specimen container can be reduced.

According to the present invention, a specimen analyzer is provided. The specimen analyzer (100) includes: the aforementioned specimen rack transport device (200); and a measurement device (101) configured to measure a specimen inside the specimen container on the specimen rack transported by the specimen rack transport device.

In this configuration, even if a specimen is spilled from a specimen container onto the placement surface of the specimen rack transport device, the specimen flows through the flow path member and is collected in the collecting container. Consequently, work load for cleaning that becomes necessary upon spilling of the specimen from the specimen container can be reduced.

According to the present invention, a method for collecting a specimen spilled from a specimen container onto a placement surface of a specimen rack transport device including a transport mechanism configured to transport, on the placement surface, a specimen rack holding the specimen container is provided. The method for collecting the specimen spilled from the specimen container is a method for collecting a specimen spilled from a specimen container onto a placement surface of a specimen rack transport device including a transport mechanism part configured to transport a specimen rack holding the specimen container. The method includes: receiving the specimen by a flow path member; causing the specimen received by the flow path member to flow toward a collecting container by the flow path member; and collecting, by the collecting container, the specimen having been caused to flow by the flow path member.

In this configuration, even if a specimen is spilled from a specimen container onto the placement surface of the specimen rack transport device, the specimen flows through the flow path member and is collected by the collecting container. Consequently, work load for cleaning that becomes necessary upon spilling of the specimen from the specimen container can be reduced.

The present invention makes it possible to provide a specimen rack transport device, an analyzer including the same, and a method for collecting a specimen spilled from a specimen container that enable reduction of work load for cleaning that becomes necessary upon spilling of the specimen from the specimen container.

### BRIEF DESCRIPTION OF THE DRAWINGS

FIG. 1A is a perspective view showing a specimen analyzer including a specimen rack transport device according to a first embodiment of the present invention;
FIG. 1B is a block diagram showing a function configuration of a measurement device and the specimen rack transport device of the first embodiment;
FIG. 2 is a perspective view showing a specimen rack and a specimen container to be transported by the specimen rack transport device of the first embodiment;
FIG. 3 is a plan view showing a schematic configuration of the specimen rack transport device of the first embodiment;
FIG. 4A is a perspective view of the specimen rack transport device of the first embodiment, as seen from the left front side;
FIG. 4B is a perspective view of the specimen rack transport device of the first embodiment, as seen from the right front side;
FIG. 4C is a perspective view showing the positions of openings and gaps in the specimen rack transport device shown in FIG. 4B;
FIG. 5 is a perspective view showing the positions of openings and gaps, and a state where a collecting container of the specimen rack transport device of the first embodiment is drawn out;
FIG. 6 is a front view of the specimen rack transport device of the first embodiment;
FIG. 7 is a cross-sectional view taken at line I-I indicated by arrows shown in FIG. 6;
FIG. 8 is a cross-sectional view taken at line II-II indicated by arrows shown in FIG. 6;
FIG. 9 is a cross-sectional view taken at line III-III indicated by arrows shown in FIG. 7;
FIG. 10A is a perspective view of a sealing member disposed on the farther side relative to a fifth opening in the specimen rack transport device of the first embodiment;
FIG. 10B is a partial schematic vertical cross-sectional view showing the sealing member disposed on the farther side relative to the fifth opening in the specimen rack transport device of the first embodiment;
FIG. 11 shows a schematic vertical cross section, as seen from the front side, for explaining the positional relationship among openings, flow path members, and the collecting container in the specimen rack transport device of the first embodiment;
FIG. 12 is a schematic cross-sectional view taken at line IV-IV indicated by arrows shown in FIG. 11;
FIG. 13 is a schematic vertical cross-sectional view showing a downwardly-extending portion provided to an opening in a table of a specimen rack transport device of a second embodiment; and
FIG. 14 is a schematic horizontal cross-sectional view for explaining arrangement of flow path members in a specimen rack transport device of a third embodiment, as seen from above.

### DETAILED DESCRIPTION

Hereinafter, embodiments of the present disclosure will be described with reference to the drawings. The following description is merely illustrative in all aspects, and should not be considered as restricting the present disclosure.

### (First Embodiment)

A specimen rack transport device according to the present embodiment is used for sequentially transporting, to a specimen analyzer such as a blood testing device or a urine testing device, a specimen rack holding a specimen container storing therein a liquid specimen such as blood or urine in order to efficiently test the specimen.

As a specific example of a situation in which the specimen rack transport device is used, a schematic configuration of a specimen analyzer including the specimen rack transport device will be described first.

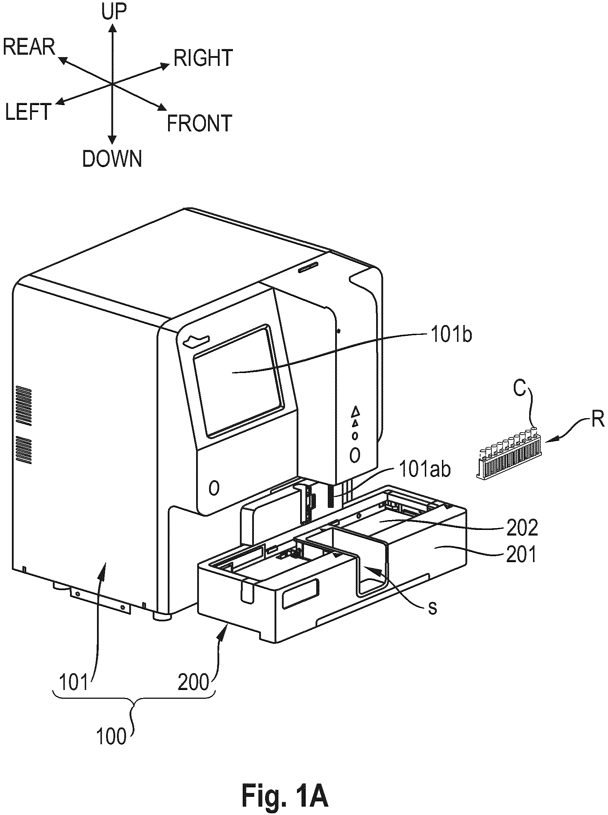

FIG. 1A is a perspective view showing the specimen analyzer including the specimen rack transport device according to the first embodiment. In FIG. 1A, frontward, rearward, leftward, rightward, upward, and downward directions are indicated by respective arrows. Directions in descriptions about a specimen analyzer 100 and descriptions about a specimen rack transport device 200 that are given below are based on the directions shown.

The specimen analyzer 100 is a urine analyzer that analyzes particles such as red blood cells, white blood cells, epithelial cells, casts, and bacteria contained in urine. As shown in FIG. 1A, the specimen analyzer 100 includes a measurement device 101 and the specimen rack transport device 200 disposed frontward of the measurement device 101. The specimen rack transport device 200 transports, on a table 202, a specimen rack R holding specimen containers C. The measurement device 101 suctions a urine specimen from each of the specimen containers C on the specimen rack R transported by the specimen rack transport device 200, and measures and analyzes the urine specimen.

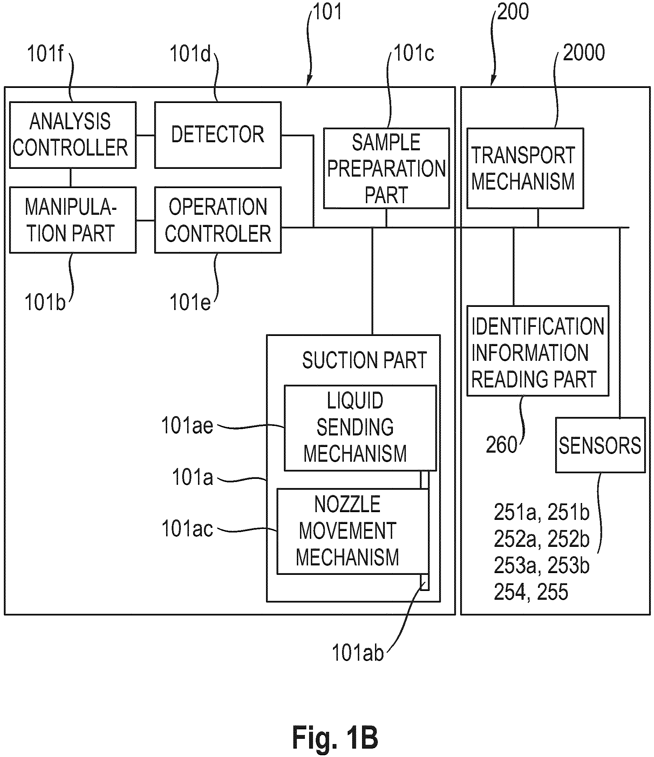

FIG. 1B is a block diagram showing a function configuration of the measurement device and the specimen rack transport device. As shown in FIG. 1B, the measurement device 101 includes a suction part 101a, a sample preparation part 101c, a detector 101d, an operation controller 101e, an analysis controller 101f, and a manipulation part 101b.

The suction part 101a suctions the urine specimen stored in the specimen container C. The sample preparation part 101c mixes a reagent with the urine specimen suctioned by the suction part 101a, to prepare a measurement sample. The detector 101d detects, through flow cytometry, particles contained in the measurement sample prepared by the sample preparation part 101c. The analysis controller 101f analyzes the particles detected by the detector 101d and calculates a concentration of the particles contained in the urine specimen. The manipulation part 101b outputs an analysis result including the concentration of the particles calculated by the analysis controller 101f and receives various manipulations performed on the specimen analyzer 100 from an operator.

The specimen rack transport device 200 includes a transport mechanism 2000, an identification information reading part 260, and a plurality of sensors.

The transport mechanism 2000 transports the specimen rack R on the table 202. The identification information reading part 260 reads identification information about each specimen from the corresponding specimen container C on the specimen rack R transported on the table 202.

The sensors sense the specimen rack R on the table 202 and include first sensors 251a and 251b, second sensors 252a and 252b, third sensors 253a and 253b, a fourth sensor 254, and a fifth sensor 255.

The operation controller 101e of the measurement device 101 controls measurement operation that is performed by the measurement device 101 and transport operation that is performed by the specimen rack transport device 200. The operation controller 101e controls identification information reading that is performed by the identification information reading part 260. Moreover, the operation controller 101e controls operations of the suction part 101a, the sample preparation part 101c, the detector 101d, and the transport mechanism 2000 on the basis of outputs from the respective sensors 251a, 251b, 252a, 252b, 253a, 253b, 254, and 255.

The suction part 101a includes: a suction nozzle 101ab which suctions a urine specimen; a nozzle movement mechanism 101ac capable of moving the suction nozzle 101ab in the up-down direction and the front-rear direction; and a liquid sending mechanism 101ae which sends the urine specimen suctioned by the suction nozzle 101ab to the sample preparation part 101c.

The nozzle movement mechanism 101ac is not particularly limited as long as the mechanism can move the suction nozzle 101ab in the up-down direction and the front-rear direction. For example, the mechanism can be configured by combining, as appropriate, a motor and a power transmission mechanism such as a rack-and-pinion mechanism or a pulley-and-belt mechanism.

The liquid sending mechanism 101ae is not particularly limited as long as the mechanism can send the urine specimen suctioned by the suction nozzle 101ab to the sample preparation part 101c. For example, the mechanism can be configured by combining a pump and a valve as appropriate.

As shown in FIG. 1A, the suction nozzle 101ab can be positioned above the specimen rack transport device 200 through operation by the nozzle movement mechanism 101ac.

As shown in FIG. 1A, the manipulation part 101b is a touch panel provided on the front surface of the measurement device 101. The operation controller 101e includes a field-programmable gate array (FPGA), and the analysis controller 101f includes a processor, memories such as a ROM and a RAM, and a storage such as a solid-state drive (SSD) and a hard disk.

However, the analysis controller 101f does not necessarily have to be incorporated in the measurement device 101. For example, the measurement device 101 including the suction part 101a, the sample preparation part 101c, the detector 101d, and the operation controller 101e, and the analysis controller 101f provided outside of the measurement device 101, may be communicably connected to each other.

As the measurement device 101, for example, a device described in U.S. Patent Publication No. 2018-0348200 can be used, and this U.S. Patent Publication No. 2018-0348200 is hereby incorporated by reference.

Next, a specimen rack to be transported by the specimen rack transport device according to the present embodiment will be described.

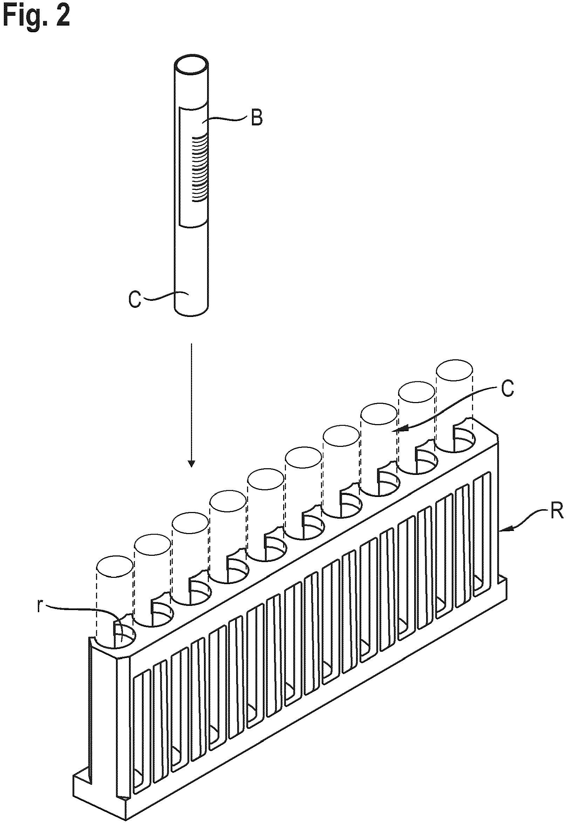

FIG. 2 is a perspective view showing the specimen rack R and the specimen container C to be transported by the specimen rack transport device of the first embodiment.

As shown in FIG. 2, the specimen container C has a thin and long tubular shape with one end thereof being a round bottom, and has a side surface on which a label B is pasted. On the label B, a barcode indicating identification information about the specimen is printed. The specimen rack R has a shape that enables a plurality of the specimen containers C to be held in a state of standing. In the present embodiment, the specimen rack R has ten specimen container holding portions r so as to be able to hold ten specimen containers C. Each of the specimen containers C stores therein a specimen, is held by the corresponding specimen container holding portion r on the specimen rack R in an uncapped state, and is transported by the specimen rack transport device 200. Examples of the specimen that is stored in the uncapped specimen container C and that is analyzed by the specimen analyzer include urine. Other examples of the specimen include serum, plasma, and the like.

Hereinafter, the specimen rack transport device according to the present embodiment will be described.

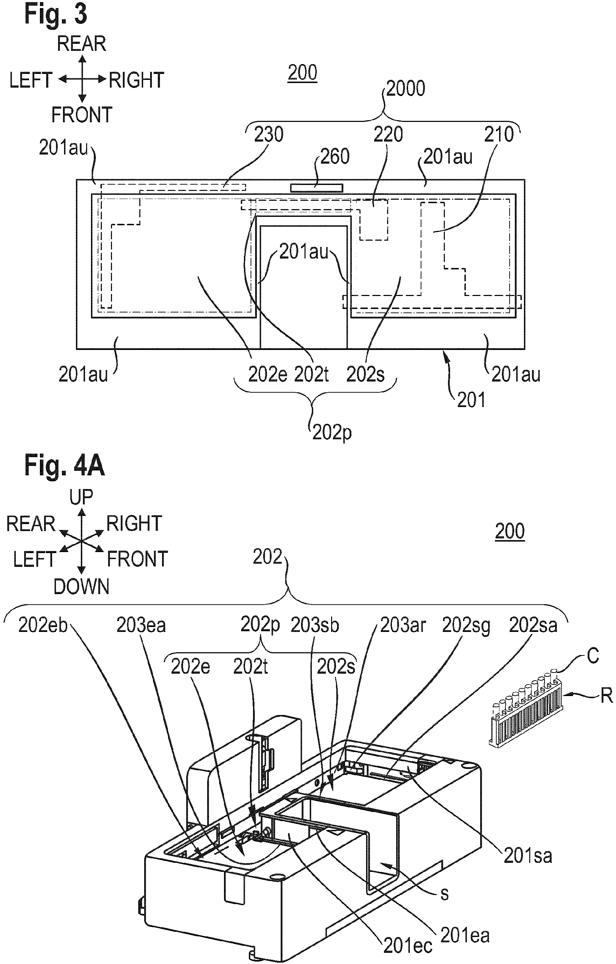

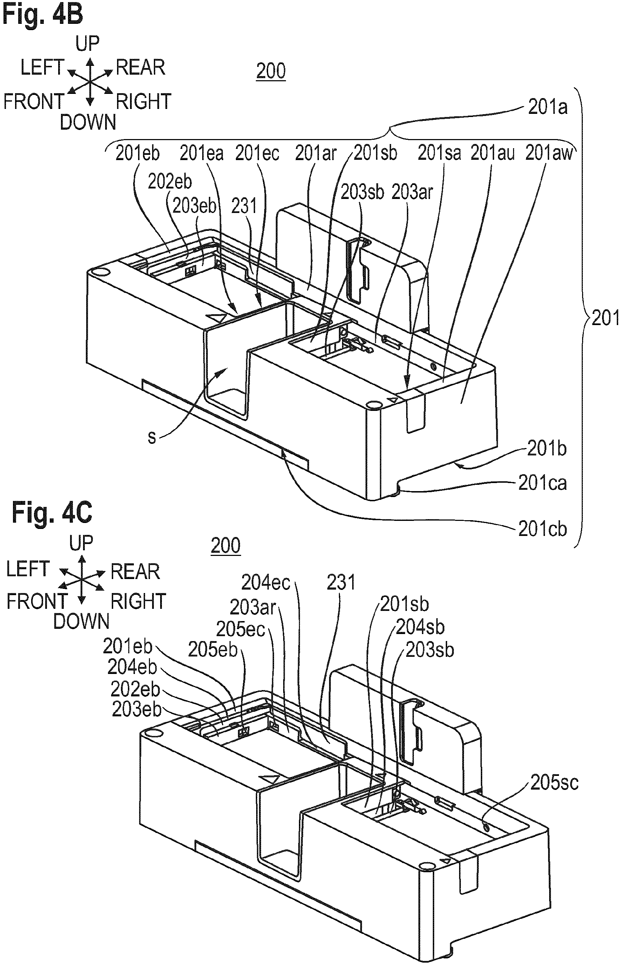

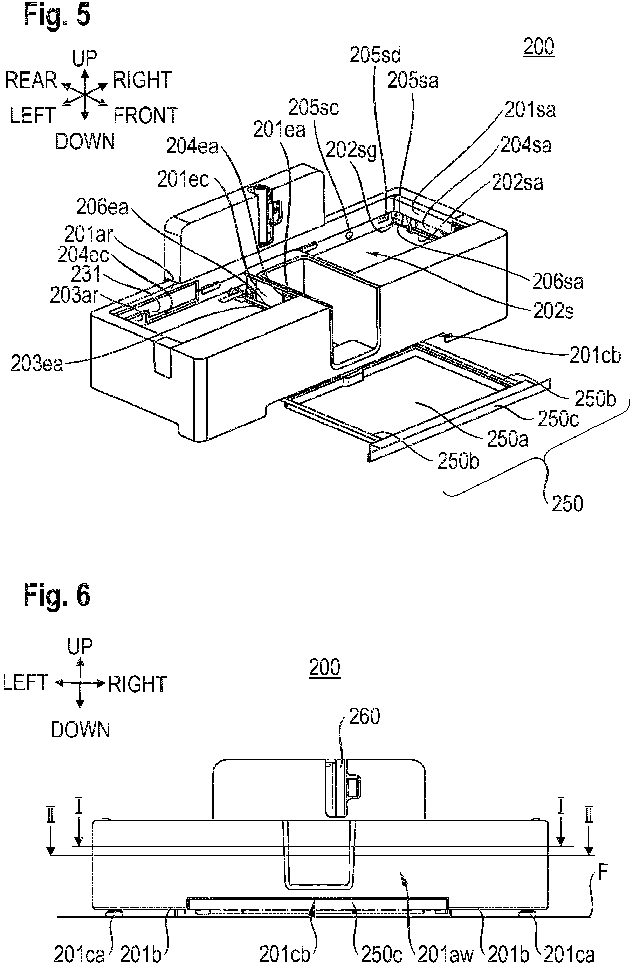

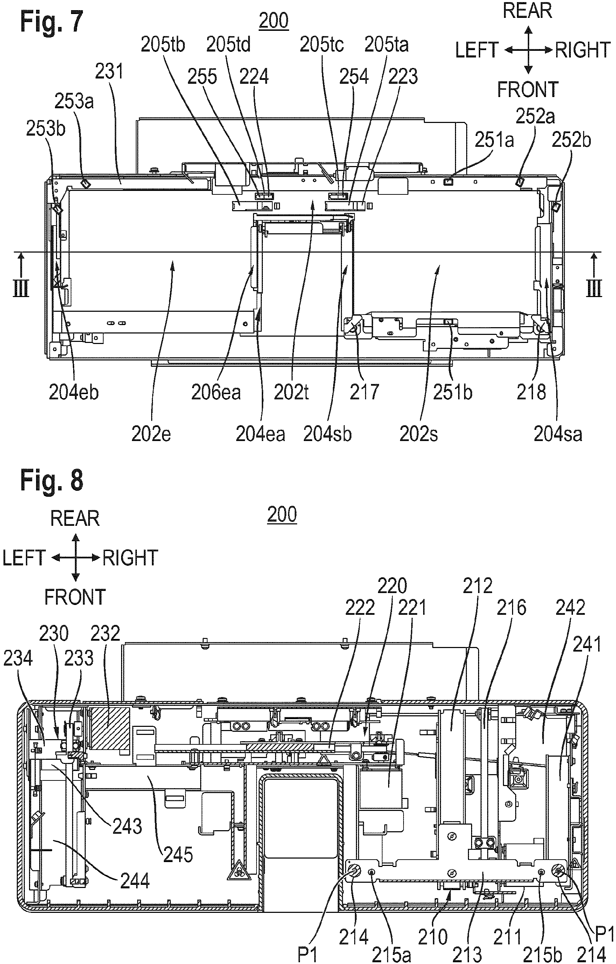

FIG. 3 is a plan view showing a schematic configuration of the specimen rack transport device according to the present embodiment, and FIG. 4A is a perspective view of the specimen rack transport device according to the present embodiment, as seen from the left front side. FIG. 4B and FIG. 4C are perspective views of the specimen rack transport device, as seen from the right front side. FIG. 5 is a perspective view showing a state where a collecting container of the specimen rack transport device shown in FIG. 4A is drawn out, as seen from the left front side. FIG. 6 is a front view of the specimen rack transport device according to the present embodiment. FIG. 7 is a cross-sectional view taken at line I-I indicated by arrows shown in FIG. 6 and shows a cross section taken at line I-I in FIG. 6, as seen from above.

As shown in FIG. 1A, FIG. 3, and FIG. 4A, the specimen rack transport device 200 according to the present embodiment includes: the table 202 including a placement surface 202p on which the specimen rack R is to be placed; the transport mechanism 2000; a housing 201; and the identification information reading part 260.

A portion of the transport mechanism 2000 is disposed below the placement surface 202p, and the transport mechanism 2000 includes a first movement mechanism part 210, a second movement mechanism part 220, and a third movement mechanism part 230 for transporting the specimen rack R placed on the placement surface 202p. The housing 201 stores therein the transport mechanism 2000 in a state where the placement surface 202p is exposed. The identification information reading part 260 reads specimen identification information from the barcode on the label B of the specimen container C on the specimen rack R placed on the placement surface 202p.

As shown in FIG. 3, the placement surface 202p is composed of a start stocking region 202s, a transport region 202t, and an end stocking region 202e. The start stocking region 202s is a region having a length, in the left-right direction, that is slightly longer than the length in the long-side direction of the specimen rack R. The start stocking region 202s is a region for transporting rearward the specimen rack R placed by an operator such that the long-side direction of the specimen rack R extends along the left-right direction of the start stocking region 202s. The end stocking region 202e is a region having a length, in the left-right direction, that is slightly longer than the length in the long-side direction of the specimen rack R. The end stocking region 202e is a region for transporting frontward the specimen rack R positioned at the rear end of the end stocking region 202e. The transport region 202t is a region having a length, in the front-rear direction, that is slightly longer than the length in the short-side direction of the specimen rack R. The transport region 202t is a region between the rear end of the start stocking region 202s and the rear end of the end stocking region 202e. The start stocking region 202s, the transport region 202t, and the end stocking region 202e form the placement surface 202p which is flat to an extent that the specimen rack R can be transported so as to be slid on these regions. The placement surface 202p is made from a hydrophobic material so as not to absorb any liquid or not to allow any liquid to pass therethrough.

The first movement mechanism part 210 is activated to transport the specimen rack R placed on the start stocking region 202s rearward to the rear end of the start stocking region 202s. The second movement mechanism part 220 is activated to transport the specimen rack R positioned at the rear end of the start stocking region 202s leftward to the rear end of the end stocking region 202e. The third movement mechanism part 230 is activated to transport the specimen rack R positioned at the rear end of the end stocking region 202e to the front end of the end stocking region 202e.

The identification information reading part 260 includes a barcode reader, and the barcode reader reads identification information about the specimen from the specimen container positioned on the transport region 202t by the second movement mechanism part 220.

As shown in FIG. 4A and FIG. 4B, the table 202 has a raised surface 203ar raised from the rear end edges of the start stocking region 202s, the transport region 202t, and the end stocking region 202e with respect to the placement surface 202p. In addition, as shown in FIG. 4A, the table 202 has a guiding portion 202sg in a direction perpendicular to each of the raised surface 203ar and the placement surface 202p. The guiding portion 202sg extends frontward from a portion of the right end of the raised surface 203ar on the rear side of the start stocking region 202s. The guiding portion 202sg which extends from the raised surface 203ar and which is perpendicular to the placement surface 202p can be said to be a raised surface with respect to the placement surface 202p. The table 202 further has: a raised surface raised, from the placement surface 202p, at the edge of a center portion (a portion excluding the front side of the right end and the rear side of the right end) of the right end of the start stocking region 202s; and a rail portion 202sa having an end portion that, at the upper end of the raised surface, is bent to the placement surface 202p side. As shown in FIG. 4B, the table 202 further has a raised surface 203sb at the edge on the front side of the left end of the start stocking region 202s. In addition, as shown in FIG. 4A, the table 202 has a small raised surface 203ea slightly raised, from the placement surface 202p, at the edge of a center portion of the right end of the end stocking region 202e. In addition, as shown in FIG. 4B, the table 202 has a left-side wall portion 202eb at the edge of the end stocking region 202e at a part thereof excluding the front side of the left end. The left-side wall portion 202eb has a raised surface 203eb raised with respect to the placement surface 202p, the upper end of the raised surface 203eb is bent outward of the placement surface 202p, and a further distal portion relative to the bent upper end is bent upward.

As shown in FIG. 4A, the table 202 is formed as a single member including: the placement surface 202p composed of the start stocking region 202s, the transport region 202t, and the end stocking region 202e; the raised surfaces 203ar, 203sb, and 203ea; the guiding portion 202sg; the rail portion 202sa; and the left-side wall portion 202eb. The raised surface 203sb and the left-side wall portion 202eb are hidden in FIG. 4A, but are shown in FIG. 4B.

The housing 201 is formed as a member separate from the table 202, and openings and gaps exist between the table 202 and the housing 201. Openings and gaps exist also in the table 202 itself. Here, the openings are each a space that, in order to allow light or a movement member to pass therethrough, is provided in the placement surface 202p or any of the raised surfaces of the table 202 or the like, is provided between one portion and another portion of the table 202, or is provided between the table 202 and a member on the periphery of the table 202. Meanwhile, the gaps are each a space that, without being intended to be provided as a space, is formed between members, e.g., between the table 202 and the housing 201 or between one portion and another portion of the table 202.

As shown in FIG. 4B, the housing 201 has an outer periphery portion 201a surrounding the periphery of the table 202. The outer periphery portion 201a has: an outer wall portion 201aw forming the outer wall of the specimen rack transport device 200; and an upper surface portion 201au extending inward from the upper end of the outer wall portion 201aw. The housing 201 further has downwardly-extending surfaces extending downward from the upper surface portion 201au at respective parts thereof positioned above the rear end of the placement surface 202p, the left end and the right end of the start stocking region 202s, and the left end and the right end of the end stocking region 202e.

As shown in FIG. 3, the upper surface portion 201au is positioned on the periphery of the placement surface 202p but is not positioned above the placement surface 202p. Therefore, the placement surface 202p is exposed upward.

A downwardly-extending surface 201ar extends downward from the upper surface portion 201au at a part thereof positioned above the rear end of the placement surface 202p (see FIG. 4B). The lower end of the downwardly-extending surface 201ar is close to the upper end of the raised surface 203ar. The lower end of the downwardly-extending surface 201ar and the upper end of the raised surface 203ar are not in close contact with each other, and thus a gap exists therebetween.

A downwardly-extending surface 201sb extends downward from the upper surface portion 201au at a part thereof positioned above the front side of the left end of the start stocking region 202s. Further, a downwardly-extending surface 201eb extends downward from the upper surface portion 201au at a part thereof positioned above the left end of the end stocking region 202e. In addition, a downwardly-extending surface 201sa hidden behind the outer periphery portion 201a in FIG. 4B extends downward from the upper surface portion 201au at a part thereof positioned above the right end of the start stocking region 202s as shown in FIG. 4A. Further, downwardly-extending surfaces 201ea and 201ec extend downward from the upper surface portion 201au at parts thereof positioned above the front side of the right end of the end stocking region 202e.

The downwardly-extending surfaces 201ar, 201sa, 201sb, 201ea, 201eb, and 201ec, and the raised surfaces 203ar, 203sb, 203ea, and 203eb are not limited to those perpendicular to the placement surface 202p and may be surfaces unparallel to the placement surface 202p. In addition, the downwardly-extending surfaces and the raised surfaces do not have to be flat surfaces and may be bent.

As shown in FIG. 4B, the end stocking region 202e sides of the raised surface 203ar and the downwardly-extending surface 201ar are partially cut, and a movement arm 231 is stored in the cut portions. The movement arm 231 is a member that is movable in order to transport the specimen rack R frontward by pushing it in the end stocking region 202e.

As shown in FIG. 5, an opening (first opening 204sa) extending in the front-rear direction exists between the rail portion 202sa at the right end of the start stocking region 202s and the downwardly-extending surface 201sa of the housing 201. Further, an opening (third opening 204ea) exists between the placement surface 202p at a part thereof on the front side of the right end of the end stocking region 202e and the downwardly-extending surface 201ea of the housing 201. A second gap 206ea exists between the downwardly-extending surface 201ec and the small raised surface 203ea positioned rearward of the third opening 204ea.

The end stocking region 202e sides of the raised surface 203ar raised from the rear end of the placement surface 202p and the downwardly-extending surface 201ar of the housing 201 are partially cut, and an opening (fifth opening 204ec) in which the movement arm 231 can be stored exists in the cut portions. In a state where the movement arm 231 is stored, the opening exists between the table 202 and the movement arm 231.

In addition, as shown in FIG. 4C, an opening (second opening 204sb) extending in the front-rear direction exists between the raised surface 203sb on the front side of the left end of the start stocking region 202s and the downwardly-extending surface 201sb of the housing 201. Further, an opening (fourth opening 204eb) extending in the front-rear direction exists between the downwardly-extending surface 201eb and the left-side wall portion 202eb in the end stocking region 202e.

Openings necessary for controlling an operation of transporting the specimen rack R are provided in the raised surfaces 203ar and 203eb of the table 202.

As shown in FIG. 5, the guiding portion 202sg on the rear side of the right end of the start stocking region 202s restricts the position of the right end of the specimen rack R transported to a rear end portion of the start stocking region 202s. A sixth opening 205sa is formed between the guiding portion 202sg and the downwardly-extending surface 201sa, and a gap (first gap 206sa) is formed between the guiding portion 202sg and the start stocking region 202s. Further, a seventh opening 205sc and an eighth opening 205sd are provided in the raised surface 203ar at a part thereof on the rear end side of the start stocking region 202s.

As shown in FIG. 4C, a ninth opening 205eb is provided in the raised surface 203eb of the left-side wall portion 202eb in the end stocking region 202e. Further, a tenth opening 205ec is provided in the raised surface 203ar on the rear end side. The lower end of each of the seventh opening 205sc, the eighth opening 205sd, the ninth opening 205eb, and the tenth opening 205ec exists at a higher position than the placement surface 202p of the table 202.

Openings are provided also in the placement surface 202p. As shown in FIG. 7, an eleventh opening 205ta extending in the left-right direction is provided in a region, of the placement surface 202p, that extends over the start stocking region 202s and the transport region 202t. A twelfth opening 205tb extending in the left-right direction is provided in a region, of the placement surface 202p, that extends over the transport region 202t and the end stocking region 202e. A thirteenth opening 205tc is provided in the transport region 202t at a part thereof positioned rearward of the eleventh opening 205ta, and a fourteenth opening 205td is provided rearward of the twelfth opening 205tb.

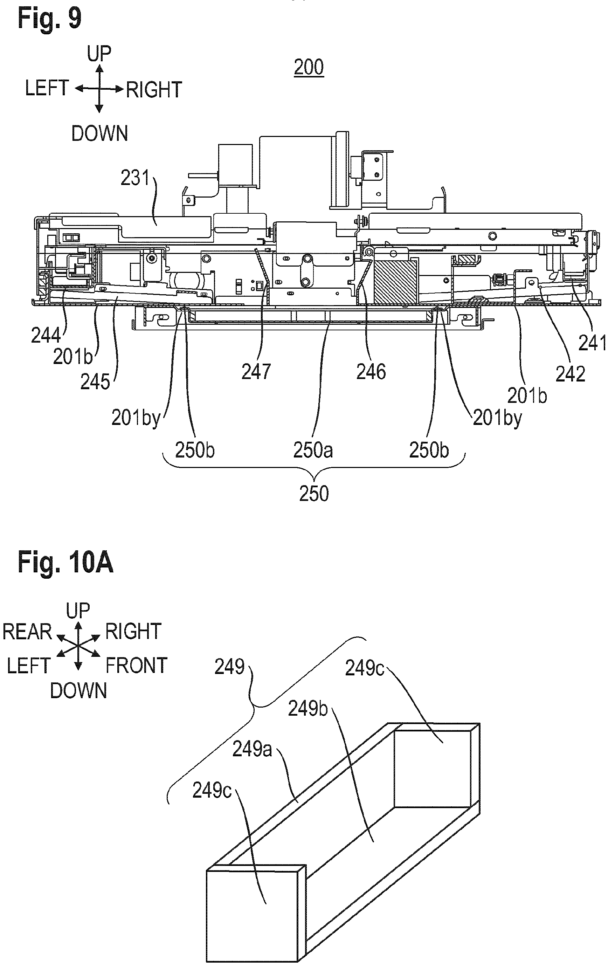

When an operator places the specimen rack R in the start stocking region 202s or takes out the specimen rack from the end stocking region 202e, the operator might overturn the specimen rack R by mistake. Since a specimen container is uncapped, an overturn of the specimen rack R can lead to, for example, spilling of a urine specimen onto the table 202 from the specimen container held on the specimen rack R. The urine specimen spilled onto the table 202 can enter the housing 201 as a result of dropping through any of the first opening 204sa to the fourth opening 204eb, the sixth opening 205sa to the fourteenth opening 205td, the first gap 206sa, and the second gap 206ea which are positioned on the periphery of the placement surface 202p. Alternatively, the specimen can enter the housing 201 as a result of dropping through any of the gaps on the periphery of the table 202 such as the gap, between the raised surface 203ar and the downwardly-extending surface 201ar, which is positioned on the periphery of the placement surface 202p. On the assumption of such cases, the specimen rack transport device 200 includes, as described later, flow path members (see FIG. 8 and FIG. 9) through which the specimen is caused to flow, and a collecting container 250 (see FIG. 5 and FIG. 9) which receives the specimen having flowed through any of the flow path members. The flow path members and the collecting container 250 will be described later.

Next, the configuration of the transport mechanism 2000 will be described. As shown in FIG. 3, the transport mechanism 2000 includes the first movement mechanism part 210, the second movement mechanism part 220, and the third movement mechanism part 230.

FIG. 8 is a cross-sectional view taken at line II-II indicated by arrows in FIG. 6 and shows a cross section, taken at line II-II in FIG. 6, of the specimen rack transport device 200 including the placement surface 202p, as seen from above. FIG. 9 is a cross-sectional view taken at line III-III indicated by arrows shown in FIG. 7 and shows a cross section taken at line III-III in FIG. 7, as seen from the front side.

The first movement mechanism part 210 includes: a left-side movement claw 217 (see FIG. 7) which is inserted in the second opening 204sb (see FIG. 4C) in the left end of the start stocking region 202s; and a right-side movement claw 218 (see FIG. 7) which is inserted in the first opening 204sa (see FIG. 5) in the right end of the start stocking region 202s. The first movement mechanism part 210 further includes: a first motor 211 (see FIG. 8) which has a rotation axis extending in the left-right direction and which is rotatable forward and reversely; and a first power transmission mechanism which converts an output in the rotation direction of the first motor 211 into a reciprocating force in the front-rear linear direction, to move the left-side movement claw 217 and the right-side movement claw 218.

The left-side movement claw 217 and the right-side movement claw 218 are provided as movement portions of the first movement mechanism part 210 for moving the specimen rack R in the start stocking region 202s.

The left-side movement claw 217 has a proximal end portion provided at the lower left side of the second opening 204sb and has a distal end portion protruding rightward by about 1 cm through the second opening 204sb such that the distal end portion is positioned above the placement surface 202p.

The right-side movement claw 218 has a proximal end portion provided at the lower right side of the first opening 204sa and has a distal end portion protruding leftward by about 1 cm through the first opening 204sa such that the distal end portion is positioned above the placement surface 202p.

As shown in FIG. 8, the first power transmission mechanism is provided directly below a center portion in the left-right direction of the start stocking region 202s. The first power transmission mechanism includes: a guide plate 212 extending in the front-rear direction; a slide plate 213 slidably attached to the guide plate 212 and extending in the left-right direction; and a pulley-and-belt mechanism 216 which moves the slide plate 213 in the front-rear direction. The slide plate 213 includes rotation shafts 214 supporting the respective proximal end portions of the left-side movement claw 217 and the right-side movement claw 218 so as to be rotatable about axes P1 in the up-down direction. The first motor 211 drives the pulley-and-belt mechanism 216. The slide plate 213 is coupled to an upper portion of a belt that is driven by the pulley-and-belt mechanism 216. A motor that needs to be energized has a high probability of failing upon contact with a specimen. Considering this, the first motor 211 is disposed at a position apart from each of positions below the first opening 204sa and the second opening 204sb.

The left-side movement claw 217 (see FIG. 7) is urged by a tension coil spring, a torsion coil spring, or the like so as to rotate clockwise. The slide plate 213 includes a restricting projection 215a (see FIG. 8) for restricting clockwise rotation of the left-side movement claw 217, and the left-side movement claw 217 is stopped at a position at which the distal end portion thereof can be brought into contact with the specimen rack R placed on the placement surface 202p. The right-side movement claw 218 (see FIG. 7) is urged by a tension coil spring, a torsion coil spring, or the like so as to rotate anticlockwise. The slide plate 213 includes a restricting projection 215b (see FIG. 8) for restricting anticlockwise rotation of the right-side movement claw 218, and FIG. 7 shows positions in a state where: the left-side movement claw 217 is brought into contact with the restricting projection 215a so that rotation of the claw is restricted; and the right-side movement claw 218 is brought into contact with the restricting projection 215b so that rotation of the claw is restricted. These positions are also positions at which the distal end portions of the left-side movement claw 217 and the right-side movement claw 218 can be brought into contact with the specimen rack R on the placement surface 202p. The positions in the front-rear direction of the slide plate 213, the left-side movement claw 217, and the right-side movement claw 218 shown in FIG. 7 and FIG. 8 are initial positions. The slide plate 213, the left-side movement claw 217, and the right-side movement claw 218 can be moved rearward from the positions thereof.

Next, the second movement mechanism part 220 will be described. The second movement mechanism part 220 includes: a pair of engagement claws 223 and 224 (see FIG. 7); a second motor 221 (see FIG. 8) having a rotation axis extending in the front-rear direction; and a second power transmission mechanism which converts an output in the rotation direction of the second motor 221 into a reciprocating force in the left-right linear direction and transmits the reciprocating force to the engagement claws 223 and 224. The second power transmission mechanism includes a pulley-and-belt mechanism 222 (see FIG. 8) provided below the transport region 202t. The second motor 221 drives the pulley-and-belt mechanism 222. A motor that needs to be energized has a high probability of failing upon contact with a specimen. Considering this, the second motor 221 is disposed at a position apart from the lower side of each of the eleventh opening 205ta to the fourteenth opening 205td (see FIG. 7).

The engagement claw 223 can protrude upward of the placement surface 202p from below the eleventh opening 205ta. The engagement claw 224 can protrude upward of the placement surface 202p from below the twelfth opening 205tb. The engagement claws 223 and 224 are each connected to the pulley-and-belt mechanism 222 by a cam mechanism. When the second motor 221 is driven, the engagement claw 223 protrudes upward of the placement surface 202p at the right end of the eleventh opening 205ta, is moved leftward, and is returned to a position below the placement surface 202p at the left end of the eleventh opening 205ta. Concurrently, the engagement claw 224 protrudes upward of the placement surface 202p at the right end of the twelfth opening 205tb, is moved leftward, and is returned to a position below the placement surface 202p at the left end of the twelfth opening 205tb. By this operation, if the specimen rack R exists on the transport region 202t, the specimen rack R is moved leftward by the distance between specimen containers C adjacent to each other in the long-side direction.

Next, the third movement mechanism part 230 will be described. The third movement mechanism part 230 includes: the movement arm 231 (see FIG. 4B, FIG. 4C, FIG. 5, and FIG. 7) which is brought into contact with the specimen rack R in the end stocking region 202e; and a third motor 232 (see FIG. 8) having a rotation axis extending in the left-right direction. The third movement mechanism part 230 further includes a third power transmission mechanism which converts an output in the rotation direction of the third motor 232 into a reciprocating force in the front-rear linear direction and transmits the reciprocating force to the movement arm 231. As shown in FIG. 8, the third power transmission mechanism includes: a pulley-and-belt mechanism 233; and a coupling plate 234 coupling together the movement arm 231 and an upper portion of a belt of the pulley-and-belt mechanism 233. The movement arm 231 is a plate-shaped member extending in the left-right direction and has a left end portion coupled to the coupling plate 234. The third motor 232 drives the pulley-and-belt mechanism 233. The positions in the front-rear direction of the movement arm 231 and the coupling plate 234 shown in FIG. 4B, FIG. 4C, FIG. 5, and FIG. 8 are initial positions. The movement arm 231 and the coupling plate 234 can be moved frontward from the initial positions thereof. At this time, the coupled portion between the movement arm 231 and the coupling plate 234 is moved in the front-rear direction along the fourth opening 204eb.

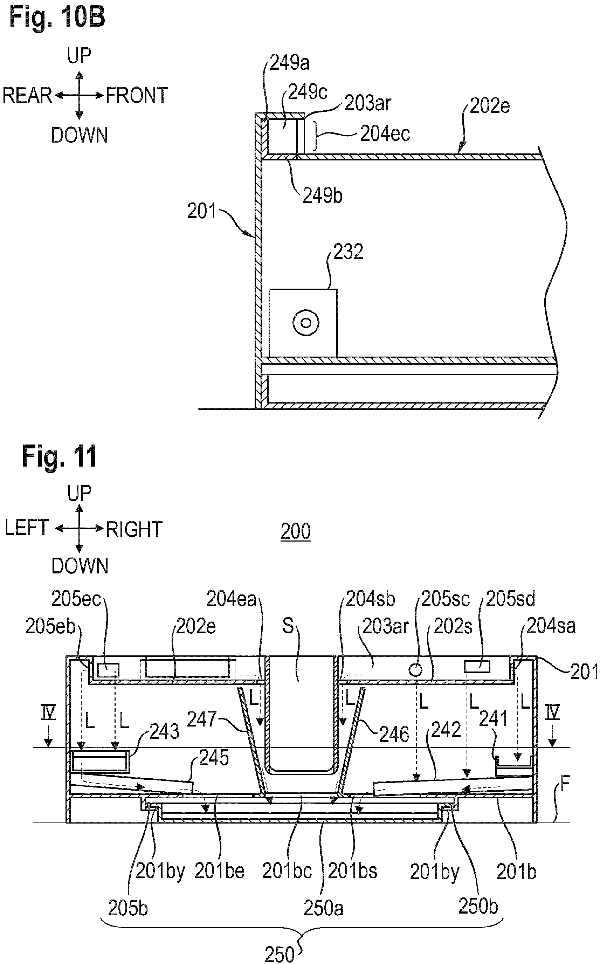

A space in which the movement arm 231 can be stored is provided on the farther side relative to the fifth opening 204ec on the rear end side of the end stocking region 202e. In this space, a sealing member is disposed. The sealing member is disposed to prevent a specimen spilled from a specimen container onto the placement surface 202p from entering the housing 201 through the fifth opening 204ec. FIG. 10A is a perspective view of the sealing member disposed in the space on the farther side relative to the fifth opening 204ec in the present embodiment. FIG. 10B is a schematic cross-sectional view showing arrangement of the sealing member shown in FIG. 10A with respect to the fifth opening 204ec, and is a partial schematic vertical cross-sectional view of a rear portion of the end stocking region 202e, as seen from the left side.

A sealing member 249 disposed on the farther side relative to the fifth opening 204ec is implemented by a waterproof sponge, and, as shown in FIG. 10A, a rear surface 249a, a bottom surface 249b, and a pair of side surfaces 249c thereof are joined together and an upper surface and a front surface thereof are opened. Further, the upper surface may be closed by a sealing member.

The distance between the pair of side surfaces 249c is equal to or longer than the distance in the left-right direction of the fifth opening 204ec. As shown in FIG. 10B, the front end of the sealing member 249 is connected to the rear end of the end stocking region 202e so as not to allow any specimen to leak. The side surfaces 249c are also connected to members that are positioned on the periphery of the fifth opening 204ec and on the back side of the raised surface 203ar among members of the table 202. Consequently, the farther side (back side) relative to the fifth opening 204ec is closed by the sealing member 249.

Thus, even if a specimen enters the farther side relative to the fifth opening 204ec from the rear end of the end stocking region 202e, the specimen stays in the region sealed by the waterproof sponge. The sealing member 249 prevents a specimen spilled from a specimen container from dropping into the housing 201 through the fifth opening 204ec.

Next, sensors provided to the specimen rack transport device 200 will be described. As shown in FIG. 7, the specimen rack transport device 200 further includes the pair of first sensors 251a and 251b, the pair of second sensors 252a and 252b, and the pair of third sensors 253a and 253b. The pair of first sensors 251a and 251b, the pair of second sensors 252a and 252b, and the pair of third sensors 253a and 253b are transmission-type photoelectronic sensors.

The first sensor 251a is a light projector and is disposed rearward of the seventh opening 205sc (see FIG. 5), at a distance (in the present embodiment, about 5 mm) from the seventh opening 205sc. The first sensor 251b is a light receiver and is disposed frontward of the front end of the start stocking region 202s, at a position opposed to the first sensor 251a.

The second sensor 252a is a light projector and is disposed on the left rear side relative to the eighth opening 205sd (see FIG. 5), at a distance (in the present embodiment, about 5 mm) from the eighth opening 205sd. The second sensor 252b is a light receiver and is disposed on the front right side relative to the sixth opening 205sa (see FIG. 5), at a distance (in the present embodiment, about 5 mm) from the sixth opening 205sa.

The third sensor 253a is a light projector and is disposed on the right rear side relative to the tenth opening 205ec (see FIG. 4C), at a distance (in the present embodiment, about 5 mm) from the tenth opening 205ec. The third sensor 253b is a light receiver and is disposed on the front left side relative to the ninth opening 205eb (see FIG. 4C), at a distance (in the present embodiment, about 5 mm) from the ninth opening 205eb.

The sixth opening 205sa to the tenth opening 205ec are used as passages for light emitted from the light projectors to the light receivers.

When the specimen rack R is placed in the start stocking region 202s, light emitted from the first sensor 251a is blocked by the specimen rack R. The operation controller 101e (see FIG. 1B) senses a change in the output from the first sensor 251b caused by the blockage of the light, thereby sensing that the specimen rack R has been placed. When the specimen rack R is transported rearward and reaches the rear end of the start stocking region 202s, light emitted from the second sensor 252a is blocked by the specimen rack R. The operation controller 101e senses a change in the output from the second sensor 252b caused by the blockage of the light, thereby sensing that the specimen rack R has reached the rear end of the start stocking region 202s. When the specimen rack R is transported leftward and reaches the rear end of the end stocking region 202e, light emitted from the third sensor 253a is blocked by the specimen rack R. The operation controller 101e senses a change in the output from the third sensor 253b caused by the blockage of the light, thereby sensing that the specimen rack R has reached the rear end of the end stocking region 202e.

As shown in FIG. 7, the fourth sensor 254 is disposed below the thirteenth opening 205tc provided in the transport region 202t. The fourth sensor 254 is a mechanical switch and has a movable portion protruding upward from the thirteenth opening 205tc. When the specimen rack R is transported over the thirteenth opening 205tc, the movable portion of the fourth sensor 254 is moved downward owing to the weight of the specimen rack R. The fourth sensor 254 detects a change in a signal caused by the movement of the movable portion and outputs the detected signal to the operation controller 101e. The operation controller 101e can determine, according to the signal from the fourth sensor 254, that the specimen rack R has reached the transport region 202t. Likewise, the fifth sensor 255 is disposed below the fourteenth opening 205td provided in the transport region 202t. The fifth sensor 255 is a mechanical switch and has a movable portion protruding upward from the fourteenth opening 205td. When the specimen rack R finishes passing over the fourteenth opening 205td, the movable portion of the fifth sensor 255 no longer bears the weight of the specimen rack R and moves upward. The fifth sensor 255 detects a change in a signal caused by the movement of the movable portion and outputs the detected signal to the operation controller 101e. The operation controller 101e can determine, according to the signal from the fifth sensor 255, that the specimen rack R has reached the left end on the rear side of the end stocking region 202e.

### <Automatic Mode>

The specimen analyzer 100 is operated in either of an automatic mode and a manual mode. An operator can select, through manipulation of the manipulation part 101b, the mode in which operation is to be performed.

In the case of the automatic mode, in the specimen analyzer 100, the specimen rack transport device 200 transports the specimen rack R, the measurement device 101 suctions a specimen from a specimen container on the transported specimen rack R, and measurement and analysis are performed. Transportation of the specimen rack R by the specimen rack transport device 200 is executed through control of the transport mechanism 2000 performed by the operation controller 101e on the basis of outputs from the first sensor 251b to the fifth sensor 255 and the identification information reading part 260.

### <Manual Mode>

In the case of the manual mode, the specimen rack transport device 200 does not transport any specimen rack R. In the manual mode, an operator takes specimen containers storing therein specimens to be analyzed, one by one in his/her hand. The operator moves each of the specimen containers to a position at which the suction nozzle 101ab moved to the upper side of a recessed space S (see FIG. 1A, FIG. 4A, and FIG. 4B) provided in the specimen rack transport device 200 enters the specimen container. The operator keeps the specimen container at this position. Thereafter, when the operator manipulates the manipulation part 101b so as to give an instruction to start measurement, the suction part 101a suctions the specimen inside the specimen container, and the measurement device 101 executes measurement and analysis of the specimen.

The recessed space S is a region enclosed by the start stocking region 202s, the transport region 202t, and the end stocking region 202e of the specimen rack transport device 200 and is a space opened upward and frontward. The recessed space S is provided as a space for, while an operator is supporting the specimen container with a hand, moving the suction nozzle 101ab to the front side (a region excluding a front end portion of the recessed space S) and performing suction, in the manual mode. The recessed space S may be opened only upward.

### <Flow Path Members and Collecting Container>

The specimen rack transport device 200 includes flow path members that, when a specimen spilled onto the placement surface 202p owing to overturning enters the housing 201 through any of the openings or the gaps, each receive the specimen and cause the specimen to flow through the flow path member. The specimen rack transport device 200 further includes the collecting container 250 which receives the specimen having flowed through the flow path member. Examples of the openings or the gaps through which the specimen can pass include the first opening 204sa to the fourth opening 204eb, the sixth opening 205sa to the fourteenth opening 205td, the first gap 206sa, and the second gap 206ea. Other examples of the openings or the gaps include gaps on the periphery of the table 202 such as the gap between the raised surface 203ar and the downwardly-extending surface 201ar.

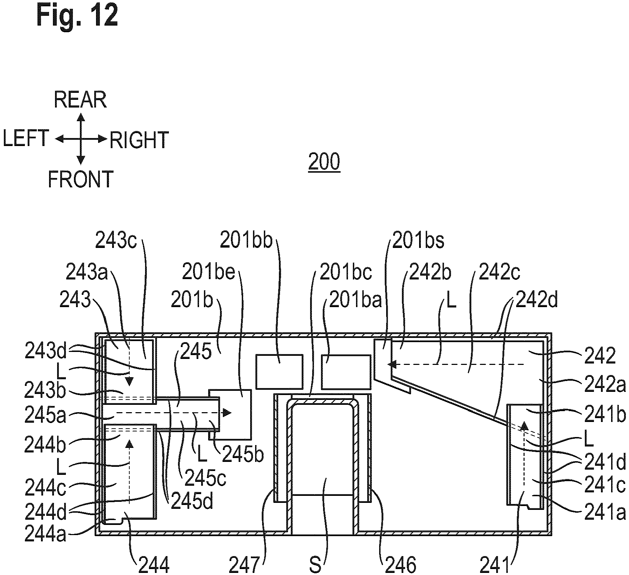

FIG. 11 shows a schematic vertical cross section, explaining the positional relationship among: the openings and the gaps provided in the raised surface 203ar and both ends of each of the start stocking region 202s and the end stocking region 202e of the specimen rack transport device 200; the gap between the raised surface 203ar and the downwardly-extending surface 201ar; and a plurality of flow path members provided below them. FIG. 11 further shows the positional relationship between the collecting container 250 and the downstream end of each of the flow path members. FIG. 11 is a schematic cross-sectional view of the specimen rack transport device 200 as seen from the front side. FIG. 12 is a cross-sectional view taken at line IV-IV indicated by arrows shown in FIG. 11 and is a schematic horizontal cross-sectional view of the specimen rack transport device 200 shown in FIG. 11 taken at line IV-IV, as seen from above.

Hereinafter, the flow path members and the collecting container 250 will be described with reference to the drawings.

The housing 201 of the specimen rack transport device 200 has a bottom plate 201b at a bottom portion thereof. As shown in FIG. 6, the bottom plate 201b is disposed at a position that, owing to a pair of left and right leg portions 201ca, is higher than the position of an installation surface F. The pair of left and right leg portions 201ca are adjustment legs, the heights of which can be adjusted.

As shown in FIG. 9 and FIG. 11, the bottom plate 201b has the shape of a substantially flat plate, below the start stocking region 202s, the transport region 202t, and the end stocking region 202e and below the front end portion of the recessed space S.

The housing 201 has a front surface having a lower end in which a cut portion 201cb for receiving the collecting container 250 (described later) from the front side is formed (see FIG. 5). On the lower surface side of the bottom plate 201b, a pair of left and right guide pieces 201by which extend frontward and rearward and which are for receiving a pair of left and right outer flange portions 250b of the collecting container 250 are provided. For example, the left-side guide piece 201by has a cross-sectional shape in which: the left end thereof is fixed to the lower surface of the bottom plate 201b; a portion, of the left-side guide piece 201by, that is closer to but excludes the right end thereof is bent downward so as to be apart from the lower surface of the bottom plate 201b; and the left-side guide piece 201by is, at a position thereof apart from the bottom plate 201b by a predetermined distance, bent parallelly to the bottom plate 201b to reach the right end. Therefore, there is a space between the right end of the left-side guide piece 201by and the bottom plate 201b. The right-side guide piece 201by has a cross-sectional shape that is left-right symmetric with the cross-sectional shape of the left-side guide piece 201by.

Next, the collecting container 250 will be described. As shown in FIG. 5, the collecting container 250 has: a container body 250a having the shape of a rectangular dish; the pair of left and right outer flange portions 250b provided along the upper left edge and the upper right edge of an outer periphery portion of the container body 250a; and a handgrip portion 250c provided along the front end of the outer periphery portion of the container body 250a. As shown in FIG. 9 and FIG. 11, the collecting container 250 is accommodated below the bottom plate 201b by being inserted rearward from the cut portion 201cb of the housing 201 such that the left and right outer flange portions 250b enter spaces between the bottom plate 201b and the respective left and right guide pieces 201by. In a state where the collecting container 250 is accommodated, the handgrip portion 250c thereof is accommodated in the cut portion 201cb of the housing 201 (see FIG. 6).

As shown in FIG. 12, the bottom plate 201b is, at parts thereof, provided with a plurality of outlets through which a specimen exits downward of the bottom plate 201b. The outlets are openings provided in the bottom plate 201b.

A first outlet 201bs is provided in a portion of the rear end of the bottom plate 201b at a part thereof positioned below the start stocking region 202s. In addition, a second outlet 201be is provided in a portion of the bottom plate 201b at a part thereof positioned below the end stocking region 202e. In the bottom plate 201b at a part thereof positioned below the recessed space S, a large third outlet 201bc is provided over the rear side and a center portion of the part, and the bottom plate 201b exists only at a front end portion of the part. A fourth outlet 201ba and a fifth outlet 201bb are provided in portions of the bottom plate 201b at a part thereof positioned below the transport region 202t. The fourth outlet 201ba is provided below the eleventh opening 205ta and the thirteenth opening 205tc of the transport region 202t. The fifth outlet 201bb is provided below the twelfth opening 205tb and the fourteenth opening 205td of the transport region 202t.

The first outlet 201bs to the fifth outlet 201bb are positioned above the container body 250a in a state where the collecting container 250 is stored below the bottom plate 201b. The collecting container 250 collects a specimen L having dropped through any of the first outlet 201bs to the fifth outlet 201bb. An operator conducting maintenance can dispose of the specimen L collected in the collecting container 250 by drawing out the collecting container 250 frontward and removing it from the specimen rack transport device 200.

A plurality of flow path members (a first flow path member 241 to a seventh flow path member 247 described later) are disposed on the bottom plate 201b. The plurality of flow path members are fixed to the bottom plate 201b via support members provided to the bottom plate 201b or are directly fixed to the bottom plate 201b. The first flow path member 241, the third flow path member 243, and the fourth flow path member 244 are fixed to the bottom plate 201b via support members. The second flow path member 242 and the fifth flow path member 245 are, on the upstream end sides thereof, fixed to the bottom plate 201b via support members and are, on the downstream end sides thereof, directly fixed to the bottom plate 201b. In addition, the sixth flow path member 246 and the seventh flow path member 247 are directly fixed to the bottom plate 201b.

As shown in FIG. 12, the specimen rack transport device 200 includes: the first flow path member 241 disposed below the front side of the right end of the start stocking region 202s; and the second flow path member 242 disposed below the rear side of the right end of the start stocking region 202s and the rear end of the start stocking region 202s. The specimen rack transport device 200 further includes: the third flow path member 243 disposed below the rear side of the left end of the end stocking region 202e; the fourth flow path member 244 disposed below the front side of the left end of the end stocking region 202e; and the fifth flow path member 245 disposed between the third flow path member 243 and the fourth flow path member 244. Moreover, the specimen rack transport device 200 includes: the sixth flow path member 246 disposed on the lower side of the outer side (right side) relative to the right end of the recessed space S; and the seventh flow path member 247 disposed on the lower side of the outer side (left side) relative to the left end of the recessed space S.

As shown in FIG. 12, the second flow path member 242 is a flow path member having a trapezoidal shape in a plan view. The flow path member is provided on the right rear side in the housing 201 and causes the specimen L to flow therethrough from the right side to the left side. The second flow path member 242 is, on the right end side thereof, fixed to the bottom plate 201b via a support member, is, on the left end side thereof, directly fixed to the bottom plate 201b, and has an even tilted surface 242c such that a right end portion 242a of the second flow path member 242 having a large width is at a higher position than a left end portion 242b thereof having a small width. The tilted surface 242c is provided to extend from the right end portion 242a on the upstream side of the flow path to the left end portion 242b on the downstream side of the flow path. In a cross section perpendicular to the direction in which the specimen L flows on the tilted surface 242c of the second flow path member 242, the second flow path member 242 has end portions 242d as both end portions thereof, in the horizontal direction, that are shaped so as to be bent upward. By such a cross-sectional shape, when the specimen L having dropped from any of the openings and the gaps or the first flow path member 241 on the upstream side is received on the second flow path member 242, the specimen L can be inhibited from being scattered outward of the flow path as a result of rebounding.

The second flow path member 242 has a shape in which the right end portion 242a is also bent upward. The left end portion 242b of the second flow path member 242 extends to a position where the left end portion 242b overlaps with the first outlet 201bs in a plan view. The tilted surface 242c of the second flow path member 242 has a tilt angle of 3° with respect to the horizontal direction defined as 0°. The tilt angle of the tilted surface 242c is not limited to 3° and is preferably in a range of 1 to 10°. If the tilt angle of the tilted surface 242c is 1 to 10°, the specimen L received by the second flow path member 242 can be quickly caused to flow to the collecting container 250, and the height of the specimen rack transport device 200 can be reduced to be low. In other words, if the tilt angle of the tilted surface 242c is smaller than 1°, the specimen L becomes likely to be accumulated on the second flow path member 242. Meanwhile, if the tilt angle of the tilted surface 242c is larger than 10°, the total height of the specimen rack transport device 200 increases, resulting in upsizing of the specimen analyzer 100.

As shown in FIG. 12, the tilted surface 242c of the second flow path member 242 is disposed below the sixth opening 205sa, the seventh opening 205sc, and the eighth opening 205sd (see FIG. 5). In addition, the tilted surface 242c is disposed below the first gap 206sa and the gap between the downwardly-extending surface 201ar and the raised surface 203ar at the rear end of the start stocking region 202s. No component of the first movement mechanism part 210 exists between the tilted surface 242c and any of the sixth opening 205sa, the seventh opening 205sc, the eighth opening 205sd, and the first gap 206sa. Therefore, as shown in FIG. 11, the specimen L having entered the housing 201 through any of the sixth opening 205sa, the seventh opening 205sc, the eighth opening 205sd, and the first gap 206sa drops onto the tilted surface 242c, flows on the tilted surface 242c, and passes through the first outlet 201bs, to be collected in the collecting container 250.

In addition, the tilted surface 242c is disposed below the gap between the downwardly-extending surface 201ar and the raised surface 203ar at the rear end of the start stocking region 202s, and no component of the first movement mechanism part 210 exists between the gap and the tilted surface 242c. Therefore, the specimen L having entered the housing 201 through the aforementioned gap drops onto the tilted surface 242c, flows on the tilted surface 242c, and passes through the first outlet 201bs, to be collected in the collecting container 250.

The second flow path member 242 receives the specimen L from a plurality of openings (the sixth opening 205sa, the seventh opening 205sc, and the eighth opening 205sd) and gaps (the first gap 206sa and the gap between the downwardly-extending surface 201ar and the raised surface 203ar at the rear end of the start stocking region 202s) and causes the specimen L to flow to the collecting container 250. Thus, the number of flow path members can be made smaller than that in a case where a flow path member is provided to each of the openings and the gaps. This contributes to reduction of the number of components in the specimen rack transport device 200.

The first flow path member 241 is a flow path member having a rectangular shape in a plan view. The flow path member is provided on the front side of the right end in the housing 201 and causes the specimen L to flow therethrough from the front side to the rear side. The first flow path member 241 is fixed to the bottom plate 201b via a support member and has an even tilted surface 241c such that a front end portion 241a of the first flow path member 241 is at a higher position than a rear end portion 241b thereof. The tilted surface 241c is provided to extend from the front end portion 241a on the upstream side of the flow path to the rear end portion 241b on the downstream side of the flow path. In a cross section perpendicular to the direction in which the specimen L flows on the tilted surface 241c of the first flow path member 241, the first flow path member 241 has end portions 241d as both end portions thereof, in the horizontal direction, that are shaped so as to be bent upward. By such a cross-sectional shape, when the specimen L having dropped from an opening is received on the first flow path member 241, the specimen L can be inhibited from being scattered outward of the flow path as a result of rebounding. The rear end portion 241b of the first flow path member 241 is at a higher position than the tilted surface 242c of the second flow path member 242 and extends to a position at which both the rear end portion 241b and the tilted surface 242c overlap with each other in a plan view. That is, the first flow path member 241 and the second flow path member 242 are disposed at mutually different heights such that the specimen L can be transferred from the first flow path member 241 to the second flow path member 242. Alternatively, the second flow path member 242 and the first flow path member 241 may be disposed such that the rear end portion 241b of the tilted surface 241c of the first flow path member 241 is in contact with the right end portion 242a of the tilted surface 242c of the second flow path member 242 with no step therebetween.

The tilted surface 241c of the first flow path member 241 has a tilt angle of 3° with respect to the horizontal direction defined as 0°. The tilt angle of the tilted surface 241c is not limited to 3° and is preferably in a range of 1 to 10° as described above.

A pair of flow path members are formed by the second flow path member 242 and the first flow path member 241. The pair of flow path members formed by the second flow path member 242 and the first flow path member 241 are disposed non-linearly in a plan view as described above. Consequently, the flow path members can be inhibited from being lengthened in the front-rear direction or the left-right direction, whereby the installation area necessary for the specimen rack transport device 200 can be reduced. Without limitation to the case where the non-linear flow path members are formed by a plurality of members, the non-linear flow path members may be formed by a single member.

The tilted surface 241c of the first flow path member 241 is disposed below the first opening 204sa (see FIG. 5). No component of the first movement mechanism part 210 exists between the first opening 204sa and the tilted surface 241c. Therefore, as shown in FIG. 11, the specimen L having entered the housing 201 through the first opening 204sa drops onto the tilted surface 241c, flows on the tilted surface 241c, and is received on the tilted surface 242c of the second flow path member 242. Further, the specimen L having flowed through the tilted surface 242c passes through the first outlet 201bs, to be collected in the collecting container 250.

The fifth flow path member 245 is a flow path member having a rectangular shape in a plan view. The flow path member extends in the left-right direction from the center portion in the front-rear direction of the left end to the second outlet 201be in the housing 201 and causes the specimen L to flow therethrough from the left side to the right side. The fifth flow path member 245 is, on the left end side thereof, fixed to the bottom plate 201b via a support member, is, on the right end side thereof, directly fixed to the bottom plate 201b, and has an even tilted surface 245c such that a left end portion 245a of the fifth flow path member 245 is at a higher position than a right end portion 245b thereof. The tilted surface 245c is provided to extend from the left end portion 245a on the upstream side of the flow path to the right end portion 245b on the downstream side of the flow path. In a cross section perpendicular to the direction in which the specimen L flows on the tilted surface 245c of the fifth flow path member 245, the fifth flow path member 245 has end portions 245d as both end portions thereof, in the horizontal direction, that are shaped so as to be bent upward. By such a shape, when the specimen L having dropped from an opening or the third flow path member 243 and the fourth flow path member 244 on the upstream side is received on the fifth flow path member 245, the specimen L can be inhibited from being scattered outward of the flow path as a result of rebounding. The fifth flow path member 245 has a shape in which the left end portion 245a is also bent upward. The right end portion 245b of the fifth flow path member 245 extends to a position where the right end portion 245b overlaps with a center portion in the front-rear direction of the second outlet 201be in a plan view. The tilted surface 245c of the fifth flow path member 245 has a tilt angle of 3° with respect to the horizontal direction defined as 0°. The tilt angle of the tilted surface 245c is not limited to 3° and is preferably in a range of 1 to 10° as described above.

The tilted surface 245c of the fifth flow path member 245 is disposed below a center portion of the fourth opening 204eb. No component of the third movement mechanism part 230 exists between the fourth opening 204eb and the tilted surface 245c. Therefore, the specimen L having entered the housing 201 through the center portion of the fourth opening 204eb drops onto the tilted surface 245c, flows on the tilted surface 245c, and passes through the second outlet 201be, to be collected in the collecting container 250.

The third flow path member 243 is a flow path member having a rectangular shape in a plan view. The flow path member is provided on the left rear side in the housing 201 and causes the specimen L to flow therethrough from the rear side to the front side. The third flow path member 243 is fixed to the bottom plate 201b via a support member and has an even tilted surface 243c such that a rear end portion 243a of the third flow path member 243 is at a higher position than a front end portion 243b thereof. The tilted surface 243c is provided to extend from the rear end portion 243a on the upstream side of the flow path to the front end portion 243b on the downstream side of the flow path. In a cross section perpendicular to the direction in which the specimen L flows on the tilted surface 243c of the third flow path member 243, the third flow path member 243 has end portions 243d as both end portions thereof, in the horizontal direction, that are shaped so as to be bent upward. The third flow path member 243 has a shape in which the rear end portion 243a is also bent upward. By such a shape, when the specimen L having dropped from an opening is received on the third flow path member 243, the specimen L can be inhibited from being scattered outward of the flow path as a result of rebounding. The front end portion 243b of the third flow path member 243 is at a higher position than the tilted surface 245c of the fifth flow path member 245 and extends to a position at which both the front end portion 243b and the tilted surface 245c overlap with each other in a plan view. That is, the third flow path member 243 and the fifth flow path member 245 are disposed at mutually different heights such that the specimen L can be transferred from the third flow path member 243 to the fifth flow path member 245. Alternatively, the fifth flow path member 245 and the third flow path member 243 may be disposed such that the front end portion 243b of the tilted surface 243c of the third flow path member 243 is in contact with the left end portion 245a of the tilted surface 245c of the fifth flow path member 245 with no step therebetween. The tilted surface 243c of the third flow path member 243 has a tilt angle of 3° with respect to the horizontal direction defined as 0°. The tilt angle of the tilted surface 243c is not limited to 3° and is preferably in a range of 1 to 10° as described above.

The tilted surface 243c of the third flow path member 243 is disposed below the ninth opening 205eb and the tenth opening 205ec (see FIG. 4C). In addition, the tilted surface 243c is disposed below a region from a center portion to the rear side of the fourth opening 204eb between the left-side wall portion 202eb and the downwardly-extending surface 201eb. No component of the third movement mechanism part 230 exists between the tilted surface 243c and any of the fourth opening 204eb, the ninth opening 205eb, and the tenth opening 205ec. Therefore, as shown in FIG. 11, the specimen L having entered the housing 201 through any of the fourth opening 204eb, the ninth opening 205eb, and the tenth opening 205ec drops onto the tilted surface 243c, flows on the tilted surface 243c, and is received on the tilted surface 245c of the fifth flow path member 245. Further, the specimen L flows on the tilted surface 245c and passes through the second outlet 201be, to be collected in the collecting container 250.

The third flow path member 243 receives the specimen L from any of the plurality of openings (the fourth opening 204eb, the ninth opening 205eb, and the tenth opening 205ec) and causes the specimen L to flow downward therethrough. Thus, the number of flow path members can be made smaller than that in a case where a flow path member is provided to each of the openings. This contributes to reduction of the number of components in the specimen rack transport device 200.

The fourth flow path member 244 is a flow path member having a rectangular shape in a plan view. The flow path member is provided on the left front side in the housing 201 and causes the specimen L to flow therethrough from the front side to the rear side. The fourth flow path member 244 is fixed to the bottom plate 201b via a support member and has an even tilted surface 244c such that a front end portion 244a of the fourth flow path member 244 is at a higher position than a rear end portion 244b thereof. The tilted surface 244c is provided to extend from the front end portion 244a on the upstream side to the rear end portion 244b on the downstream side. In a cross section perpendicular to the direction in which the specimen L flows on the tilted surface 244c of the fourth flow path member 244, the fourth flow path member 244 has end portions 244d as both end portions thereof, in the horizontal direction, that are shaped so as to be bent upward. By such a shape, when the specimen L having dropped from an opening is received on the fourth flow path member 244, the specimen L can be inhibited from being scattered outward of the flow path as a result of rebounding. The rear end portion 244b of the fourth flow path member 244 is at a higher position than the tilted surface 245c of the fifth flow path member 245 and extends to a position where the rear end portion 244b overlaps with the tilted surface 245c of the fifth flow path member 245 in a plan view. That is, the fourth flow path member 244 and the fifth flow path member 245 are disposed at mutually different heights such that the specimen L can be transferred from the fourth flow path member 244 to the fifth flow path member 245. Alternatively, the fifth flow path member 245 and the fourth flow path member 244 may be disposed such that the rear end portion 244b of the tilted surface 244c of the fourth flow path member 244 is in contact with the left end portion 245a of the tilted surface 245c of the fifth flow path member 245 with no step therebetween. The tilted surface 244c of the fourth flow path member 244 has a tilt angle of 3° with respect to the horizontal direction defined as 0°. The tilt angle of the tilted surface 244c is not limited to 3° and is preferably in a range of 1 to 10° as described above.

The tilted surface 244c of the fourth flow path member 244 is disposed below a region from the center portion to the front side of the fourth opening 204eb (see FIG. 4C) between the left-side wall portion 202eb and the downwardly-extending surface 201eb of the housing 201. No component exists between the fourth opening 204eb and the tilted surface 244c. Therefore, as shown in FIG. 12, the specimen L having entered the housing 201 through the fourth opening 204eb drops onto the tilted surface 244c, flows on the tilted surface 244c, and is received on the tilted surface 245c of the fifth flow path member 245. Further, the specimen L flows on the tilted surface 245c and passes through the second outlet 201be, to be collected in the collecting container 250.

A pair of flow path members are formed by the fifth flow path member 245 and the third flow path member 243. The pair of flow path members formed by the fifth flow path member 245 and the third flow path member 243 are disposed non-linearly in a plan view as described above. In addition, a pair of flow path members are formed by the fifth flow path member 245 and the fourth flow path member 244. The pair of flow path members formed by the fifth flow path member 245 and the fourth flow path member 244 are also disposed non-linearly in a plan view as described above. Consequently, the flow path members can be inhibited from being lengthened in the front-rear direction or the left-right direction, whereby the installation area necessary for the specimen rack transport device 200 can be reduced. Without limitation to the case where the non-linear flow path members are formed by a plurality of members, the non-linear flow path members may be formed by a single member.

In addition, since the fifth flow path member 245 is used for both the pair of flow path members formed by the fifth flow path member 245 and the third flow path member 243 and the pair of flow path members formed by the fifth flow path member 245 and the fourth flow path member 244, the number of flow path members can be made smaller than that in a case where each pair of flow paths are individually provided. This contributes to reduction of the number of components in the specimen rack transport device 200.

The third outlet 201bc is positioned directly below a region, of the recessed space S, that excludes the front end portion thereof. Thus, in the manual mode, a urine specimen spilled above or inside the recessed space S directly drops and is collected in the collecting container 250 below the recessed space S. For example, it is assumed that an operator has spilled a urine specimen from a specimen container owing to erroneous manipulation when the operator attempts to advance the specimen container with respect to the suction nozzle 101ab positioned in the region, of the recessed space S, that excludes the front end portion thereof in the manual mode. In this case, the specimen L drops and is collected in the collecting container 250 exposed to the lower side of the third outlet 201bc provided below the region, of the recessed space S, that excludes the front end portion thereof.

The sixth flow path member 246 is a tilted plate that is fixed to the bottom plate 201b and that is raised so as to be tilted in a direction obliquely upward to the right from the right-side opening edge of the third outlet 201bc (see FIG. 9 and FIG. 11). The sixth flow path member 246 has an upper end positioned rightward of the second opening 204sb (see FIG. 4C), and has a lower end positioned slightly inward (leftward) of the right end of the third outlet 201bc. The length in the front-rear direction of the sixth flow path member 246 is longer than the length in the front-rear direction of the second opening 204sb. Therefore, when the specimen L drops from the start stocking region 202s through the second opening 204sb, the specimen L flows downward along the sixth flow path member 246 and passes through the third outlet 201bc, to be collected in the collecting container 250 (see FIG. 11).

The seventh flow path member 247 is a tilted plate that is fixed to the bottom plate 201b and that is raised so as to be tilted in a direction obliquely upward to the left from the left-side opening edge of the third outlet 201bc. The seventh flow path member 247 has an upper end positioned leftward of the third opening 204ea and the second gap 206ea and has a lower end positioned slightly inward (rightward) of the left end of the third outlet 201bc. In addition, the length in the front-rear direction of the seventh flow path member 247 is longer than the length in the front-rear direction from the third opening 204ea on the front side to the second gap 206ea on the rear side. Therefore, when the specimen L drops from the end stocking region 202e through at least one of the third opening 204ea and the second gap 206ea, the specimen L flows downward along the seventh flow path member 247 and passes through the third outlet 201bc, to be collected in the collecting container 250 (see FIG. 11).

The fourth outlet 201ba is disposed above the collecting container 250. The fourth outlet 201ba is disposed below the eleventh opening 205ta and the thirteenth opening 205tc (see FIG. 7). The specimen L having entered the housing 201 through the eleventh opening 205ta and the thirteenth opening 205tc passes through the fourth outlet 201ba, to be collected in the collecting container 250. The fifth outlet 201bb is disposed above the collecting container 250. The fifth outlet 201bb is disposed below the twelfth opening 205tb and the fourteenth opening 205td (see FIG. 7). The specimen L having entered the housing 201 through the twelfth opening 205tb and the fourteenth opening 205td passes through the fifth outlet 201bb, to be collected in the collecting container 250.

As described above, the specimen rack transport device 200 according to the first embodiment includes the transport mechanism 2000 which transports, on the placement surface 202p, the specimen rack R holding the specimen container C. In addition, the specimen rack transport device 200 includes: the first flow path member 241 to the seventh flow path member 247 which receive the specimen L spilled from the specimen container onto the placement surface 202p and cause the specimen L to flow through the flow path members; and the collecting container 250 which collects the specimen L having flowed through any of the flow path members.

In this configuration, even if a specimen is spilled from a specimen container onto the placement surface, work load for cleaning that becomes necessary upon the spilling of the specimen from the specimen container can be reduced.

The first flow path member 241 to the seventh flow path member 247 receive the specimen L having passed through any of: the first opening 204sa to the fourth opening 204eb and the sixth opening 205sa which are openings between the housing 201 and the table 202; the seventh opening 205sc to the tenth opening 205ec which are provided in the corresponding raised surfaces; the first gap 206sa; the second gap 206ea; and the gap between the raised surface 203ar and the downwardly-extending surface 201ar (see FIG. 4C and FIG. 5). There is a high probability that the specimen L spilled onto the placement surface 202p owing to overturning enters the housing 201 through any of these openings or gaps. If the first flow path member 241 to the seventh flow path member 247 are provided, the specimen L can be received and caused to flow to be collected in the collecting container 250.

The first flow path member 241 to the seventh flow path member 247 are disposed below the first opening 204sa to the fourth opening 204eb, the sixth opening 205sa to the tenth opening 205ec, the first gap 206sa, the second gap 206ea, and the gap between the raised surface 203ar and the downwardly-extending surface 201ar. This configuration enables the first flow path member 241 to the seventh flow path member 247 to receive a specimen naturally dropped from any of these openings or gaps. Thus, it is unnecessary to separately provide any member for causing the specimen L to flow from the openings or the gaps to the first flow path member 241 to the seventh flow path member 247.

The first flow path member 241 to the fifth flow path member 245 have the tilted surfaces 241c to 245c that allow the specimen L to flow thereon. The sixth flow path member 246 and the seventh flow path member 247 have surfaces raised so as to be tilted in obliquely upward directions from both right and left ends of the third outlet 201bc. This configuration eliminates the need for providing any power source such as a pump for causing the specimen L to flow.

The lower ends of the seventh opening 205sc to the tenth opening 205ec provided in the corresponding raised surfaces are at higher positions than the placement surface 202p. This configuration makes it possible to inhibit the specimen L spilled onto the placement surface 202p from entering the housing 201 through any of the seventh opening 205sc to the tenth opening 205ec.

In the specimen rack transport device 200 used for the specimen analyzer 100 according to the first embodiment, the upper side of at least a portion of the collecting container 250 is opened. In the measurement device 101, the suction nozzle 101ab can be positioned at the position of the opened portion of the upper side of the collecting container 250. By this configuration, even if an operator spills a specimen from a specimen container owing to erroneous manipulation when the suction nozzle 101ab suctions the specimen, the specimen L drops into the collecting container 250 positioned below the suction nozzle 101ab, whereby the specimen L can easily be collected. In the specimen analyzer 100 according to the first embodiment, the operation controller 101e (see FIG. 1B) which controls an operation of transporting the specimen rack R is provided in the measurement device 101. This configuration eliminates the need for providing an operation controller on the specimen rack transport device 200 side and makes it possible to reduce the risk that the operation controller fails owing to a specimen.

### (Modification of First Embodiment)

Each of the first flow path member 241 to the fifth flow path member 245 in the first embodiment may have, in a cross section thereof perpendicular to the direction in which a specimen flows on the flow path member, a shape in which end portions on both sides of the flow path member in the horizontal direction are curved upward. Each of the first flow path member 241 to the fifth flow path member 245 may be formed such that the cross section thereof perpendicular to the direction in which the specimen L flows is a cross section having, for example, a semi-round shape, a semi-elliptical shape, a V shape, or the like. If each of the first flow path member 241 to the fifth flow path member 245 is set to have such a shape, when the specimen L having dropped from any of the openings or the gaps is received by the corresponding flow path member, the specimen L can be inhibited from being scattered outward of the flow path as a result of rebounding.

### (Second Embodiment)

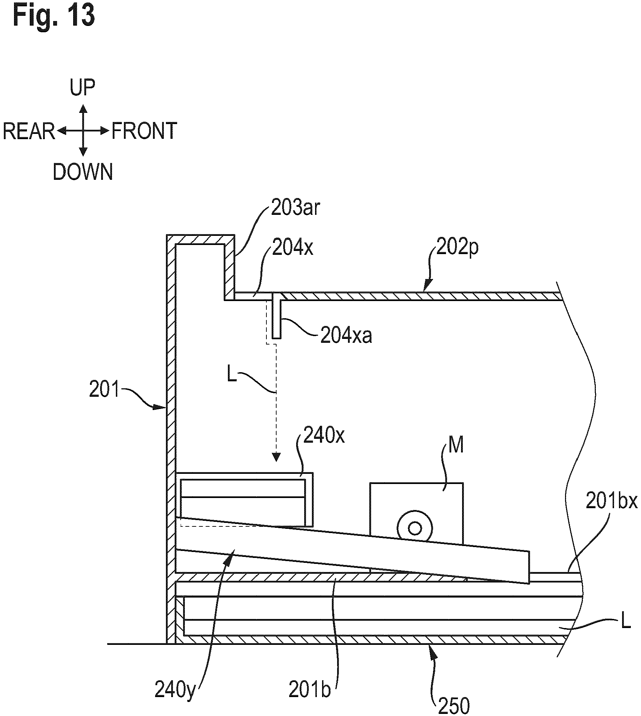

FIG. 13 is a schematic vertical cross-sectional view showing a downwardly-extending portion provided to an opening in a table of a specimen rack transport device of a second embodiment. In FIG. 13, the same elements as the elements in FIG. 11 are denoted by the same reference characters.

As shown in FIG. 13, in a specimen rack transport device 200 of the second embodiment, an opening 204x is provided in the placement surface 202p. A flow path member 240x is provided below the opening 204x, and a flow path member 240y is provided at the downstream end of the flow path member 240x. Consequently, the specimen L having entered the housing 201 through the opening 204x is received by the flow path member 240x, flows on the flow path member 240y, and passes through an outlet 201bx provided in the bottom plate 201b, to be collected in the collecting container 250.

Further, a downwardly-extending portion 204xa having a shape bent downward from the placement surface 202p is provided at an edge of the opening 204x. The downwardly-extending portion 204xa is provided above the flow path member 240x.

This configuration makes it possible to cause the specimen L to flow on the downwardly-extending portion 204xa and drop onto the flow path member 240x. In other words, the downwardly-extending portion 204xa can prevent drops of the specimen L from reaching the back surface side (lower surface side) of the placement surface 202p. Therefore, it is possible to further reduce the probability that the specimen L falls in drops onto a component of the transport mechanism 2000 disposed below the placement surface 202p, in particular, an electrical component (for example, a motor M).

### (Modification of Second Embodiment)

Although the downwardly-extending portion 204xa (see FIG. 13) in the second embodiment is bent in a direction perpendicular to the placement surface 202p, the downwardly-extending portion 204xa may be tilted to the raised surface 203ar side (the side opposite to the motor M). Alternatively, the lower end of the downwardly-extending portion 204xa may be slightly curved to the raised surface 203ar side (the side opposite to the motor M) so that the downwardly-extending portion 204xa is formed in a J shape. In this configuration, the specimen L having dropped from the opening 204x can be received by the flow path member 240x at a position further apart from a component of the transport mechanism 2000 disposed below the placement surface 202p, in particular, an electrical component (for example, the motor M). Therefore, it is possible to reduce the probability that, when the specimen L having dropped onto the flow path member 240x is scattered, a splash resulting from the scattering comes into contact with the electrical component.

### (Third Embodiment)

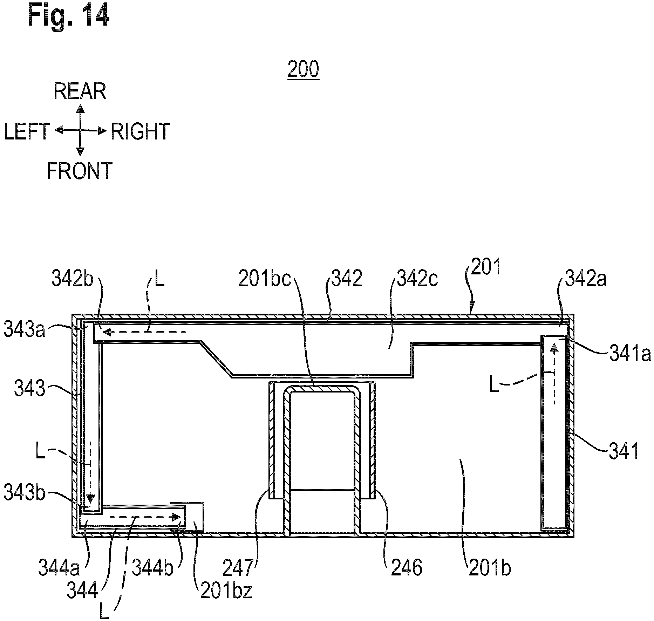

FIG. 14 is a schematic horizontal cross-sectional view for explaining arrangement of a plurality of flow path members in a specimen rack transport device of a third embodiment, as seen from above. In FIG. 14, the same elements as the elements in FIG. 12 are denoted by the same reference characters.

As shown in FIG. 14, the specimen rack transport device of the third embodiment is different from that of the first embodiment in terms of configurations regarding a plurality of flow path members provided inside the housing 201 and the bottom plate 201b of the housing 201. Hereinafter, the differences of the third embodiment from the first embodiment will be mainly described.

The arrangement of the flow path members in the specimen rack transport device 200 of the first embodiment (see FIG. 12) can be changed as appropriate. For example, in the third embodiment, the flow path members are arranged along the outer periphery of the placement surface 202p as shown in FIG. 14.

In the example shown in FIG. 14, an eleventh flow path member 341 to a fourteenth flow path member 344 are arranged from the front end to the rear end of a right end portion on the inner side of the housing 201, from the right end to the left end of a rear end portion on the said inner side, from the rear end to the front end of a left end portion on the said inner side, and along a portion in the vicinity of the left side of a front end portion on the said inner side. The flow path members are provided so as to cause the specimen L to flow linearly and in different directions. Further, in the bottom plate 201b, in addition to the third outlet 201bc provided at the center thereof, an outlet 201bz is provided on the left front side relative to the third outlet 201bc.

The eleventh flow path member 341 extending from the front end to the rear end of the right end portion is disposed such that a rear end portion 341a thereof is positioned on a right end portion 342a of the twelfth flow path member 342. The eleventh flow path member 341 is fixed via a support member provided to the bottom plate 201b. The twelfth flow path member 342 extending from the right end to the left end of the rear end portion is disposed such that a left end portion 342b thereof is positioned on a rear end portion 343a of the thirteenth flow path member 343. The twelfth flow path member 342 is fixed via a support member provided to the bottom plate 201b. The thirteenth flow path member 343 extending from the rear end to the front end of the left end portion is disposed such that a front end portion 343b thereof is positioned on a left end portion 344a of the fourteenth flow path member 344. The thirteenth flow path member 343 is fixed via a support member provided to the bottom plate 201b. The fourteenth flow path member 344 extending from the left end toward the right end of the front end portion is fixed via a support member provided to the bottom plate 201b such that a right end portion 344b of the fourteenth flow path member 344 is positioned so as to overlap with the outlet 201bz in a plan view. The eleventh flow path member 341 to the fourteenth flow path member 344 are disposed below the first opening 204sa, the fourth opening 204eb, the sixth opening 205sa to the tenth opening 205ec, the first gap 206sa, and the gap between the raised surface 203ar and the downwardly-extending surface 201ar.

The eleventh flow path member 341 to the fourteenth flow path member 344 each have an even tilted surface that allows the specimen L to flow thereon and are disposed at mutually different heights so as to enable the specimen L to be transferred therebetween. The tilted surface of each of the eleventh flow path member 341 to the fourteenth flow path member 344 has a tilt angle of 3° with respect to the horizontal direction defined as 0°. The tilt angle of each of the tilted surfaces is not limited to 3° and is preferably in a range of 1 to 10°, as described above. Each of the eleventh flow path member 341 to the fourteenth flow path member 344 has, in a cross section thereof perpendicular to the direction in which the specimen L flows on the tilted surface of the flow path member, a shape in which both end portions of the flow path member in the horizontal direction are bent upward. Each of the eleventh flow path member 341 to the fourteenth flow path member 344 may, in a cross section perpendicular to the direction in which the specimen L flows on the tilted surface of the flow path member, have both end portions in the horizontal direction that are curved upward, or be bent in a V shape. The eleventh flow path member 341, the thirteenth flow path member 343, and the fourteenth flow path member 344 are each formed to have a fixed width. The twelfth flow path member 342 has a large-width portion 342c having a large width and disposed below the eleventh opening 205ta and the twelfth opening 205tb. Alternatively, the twelfth flow path member 342 may be formed such that the entirety thereof has a fixed width adjusted to the width of the large-width portion 342c.

According to the third embodiment, the eleventh flow path member 341 to the fourteenth flow path member 344 can be arranged along the outer periphery of the placement surface 202p. Therefore, it becomes easy to ensure a wide space on the inner side of the eleventh flow path member 341 to the fourteenth flow path member 344. Among the eleventh flow path member 341 to the fourteenth flow path member 344, the eleventh flow path member 341 is disposed at the highest position. Therefore, for example, with the eleventh flow path member 341 being disposed above a component (for example, the first motor 211) of the first movement mechanism part 210 without interfering with the component, the specimen L can be received and caused to flow on the eleventh flow path member 341. That is, the component can be disposed in a right-side space on the bottom plate 201b, and the eleventh flow path member 341 can be disposed in a space above the component, whereby the space in the housing 201 can be further effectively utilized.

### (Modification of Third Embodiment)

The eleventh flow path member 341 to the fourteenth flow path member 344 in the third embodiment may be arranged adjacently to each other and joined to be integrated, thereby being formed as one flow path member. In this case, the one flow path member is tilted.

### (Fourth Embodiment)

In the first embodiment, no flow path member is disposed below the eleventh opening 205ta to the fourteenth opening 205td. However, all or at least some of the first flow path member 241 to the fifth flow path member 245 may be disposed above the first movement mechanism part 210 to the third movement mechanism part 230 and below the first opening 204sa, the fourth opening 204eb, the sixth opening 205sa to the tenth opening 205ec, and the eleventh opening 205ta to the fourteenth opening 205td.

### (Other Embodiments)

1. In each of the above embodiments, a case where openings are provided in the placement surface and the raised surfaces, and openings or gaps are present in the gaps between the placement surface and the raised surfaces, between the placement surface and the housing, and between the raised surfaces and the housing, has been described as an example. However, the present disclosure is not limited thereto. For example, the openings may be provided only in the placement surface or only in the raised surfaces, and only the gaps with respect to the housing may be present. Regarding the flow path members, only at least one of them has to be provided so as to receive a specimen having dropped through at least one of the openings or the gaps.
2. In the above embodiments, all of the flow path members have tilted surfaces. However, the present disclosure is not limited thereto. For example, each of the second flow path member 242 and the fifth flow path member 245 in the first embodiment may be a flow path member having no tilted surface (a surface thereof for receiving a specimen being a horizontal surface). In this case, since the second flow path member 242 has a shape in which an upstream end portion (right end portion 242a) thereof is closed and a downstream end portion (left end portion 242b) thereof is opened so that a specimen exits therefrom, a specimen having accumulated on the second flow path member 242 to some extent naturally flows to the first outlet 201bs, to be collected in the collecting container 250. Likewise, since the fifth flow path member 245 has a shape in which an upstream end portion (left end portion 245a) thereof is closed and a downstream end portion (right end portion 245b) thereof is opened so that a specimen exits therefrom, a specimen accumulated on the fifth flow path member 245 to some extent naturally flows to the second outlet 201be, to be collected in the collecting container 250. Further, each of the first flow path member 241, the third flow path member 243, and the fourth flow path member 244 may also be a flow path member having no tilted surface (a surface thereof for receiving a specimen being a horizontal surface). Further, in this case, the second flow path member 242 and the first flow path member 241 may be formed to be at different heights, or the second flow path member 242 and the first flow path member 241 may be integrated to be formed as one flow path member. Likewise, the third flow path member 243 and the fourth flow path member 244 may be formed to be at heights different from the height of the fifth flow path member 245, or the fourth flow path member 244 and the fifth flow path member 245 may be integrated to be formed as one flow path member.
3. In the first embodiment, a configuration in which a pulley-and-belt mechanism is used as the power transmission mechanism for each of the first to third movement mechanism parts has been described as an example. However, the present disclosure is not limited thereto. For example, a ball screw mechanism, a rack-and-pinion mechanism, a linear motor, or the like may be used. In addition, in the first embodiment, a configuration in which the movement claws 217 and 218, the engagement claws 223 and 224, and the movement arm 231 are used as movement portions of the first to third movement mechanism parts has been described as an example. However, a transport belt that is partially disposed on the placement surface 202p and that is configured to come into contact with the bottom surface of the specimen rack R so as to move the specimen rack R, may be used.
4. In the above embodiments, a urine analyzer for measuring particles contained in urine has been described. However, the present disclosure is not limited thereto, and another specimen analyzer such as a blood coagulation analyzer, an immuno analyzer, a biochemical analyzer, a blood cell counter, or a genetic testing device may be used.
5. In the above embodiments, the transport mechanism 2000 is only partially disposed below the placement surface 202p. However, the entire transport mechanism 2000 may be disposed below the placement surface 202p.

Preferable aspects of the present disclosure also include an aspect in which some of the above plurality of aspects are combined.

In addition to the aforementioned embodiments, various modifications of the present disclosure are possible. Such modifications should not be considered as being excluded from the scope of the present disclosure. The present disclosure should include meaning equivalent to the scope of the claims and all modifications within the scope.

### [Remarks]

The present disclosure includes the following items 1-25.

Item 1: A specimen rack transport device comprising:
a transport mechanism configured to transport, on a placement surface, a specimen rack holding a specimen container;
a flow path member configured to receive a specimen spilled from the specimen container onto the placement surface and cause the specimen to flow through the flow path member; and
a collecting container configured to collect the specimen having flowed through the flow path member.

Item 2: The specimen rack transport device of item 1, wherein
the flow path member is at least partially disposed below a periphery of the placement surface and receives the specimen having dropped from the periphery of the placement surface.

Item 3: The specimen rack transport device of item 1, wherein
the flow path member receives the specimen having passed through: an opening provided in the placement surface or in a raised surface raised with respect to the placement surface; or a gap between the placement surface and the raised surface.

Item 4: The specimen rack transport device of item 1, further comprising
a housing disposed such that at least one of an opening or a gap is formed between the housing and an edge of the placement surface or a raised surface raised with respect to the placement surface, wherein
the flow path member receives the specimen having passed through at least one of the opening or the gap between the housing and the edge of the placement surface or the raised surface raised with respect to the placement surface.

Item 5: The specimen rack transport device of item 3, wherein
the flow path member is at least partially disposed below the opening or the gap.

Item 6: The specimen rack transport device of item 5, further comprising
a housing disposed such that at least one of an opening or a gap is formed between the housing and an edge of the placement surface or the raised surface, wherein
the flow path member receives the specimen having passed through at least one of the opening or the gap between the housing and the edge of the placement surface or the raised surface raised with respect to the placement surface.

Item 7: The specimen rack transport device of item 1, wherein
the flow path member has a tilted surface that allows the specimen to flow thereon.

Item 8: The specimen rack transport device of item 1, wherein
the flow path member has, over an entirety of the flow path, a tilt angle of 1 to 10° with respect to a horizontal direction defined as 0°.

Item 9: The specimen rack transport device of item 3, wherein
a plurality of the openings are provided in the placement surface or the raised surface, and
the flow path member is at least partially disposed below the plurality of the openings.

Item 10: The specimen rack transport device of item 1, wherein
the flow path member is disposed non-linearly in a plan view.

Item 11: The specimen rack transport device of item 1, wherein
the flow path member is composed of a plurality of members that cause the specimen to flow therethrough, and,
an upstream member among the plurality of members is disposed so as to enable the specimen to be transferred to a subsequent downstream member among the plurality of members.

Item 12: The specimen rack transport device of item 1, wherein
the flow path member has, in a cross section thereof perpendicular to a direction in which the specimen is caused to flow, a shape in which both ends of the flow path member are bent upward or curved upward.

Item 13: The specimen rack transport device of item 3, wherein
a lower end of the opening in the raised surface is at a higher position than the placement surface.

Item 14: The specimen rack transport device of item 3, further comprising
a sealing member provided on a back surface side of the raised surface at a position of the opening.

Item 15: The specimen rack transport device of item 3, wherein
a downwardly-extending portion having a shape bent downward or curved downward from the placement surface is provided at an edge of the opening in the placement surface.

Item 16: The specimen rack transport device of item 1, further comprising
a housing having a side wall portion and a bottom plate and forming at least one of an opening or a gap between the housing and an edge of the placement surface or a raised surface raised with respect to the placement surface, wherein
the bottom plate has an outlet provided at a position thereof corresponding to a downstream end of the flow path member, and
the collecting container is disposed below the outlet provided in the bottom plate.

Item 17: The specimen rack transport device of item 1, wherein
the collecting container is capable of being drawn out from the specimen rack transport device.

Item 18: The specimen rack transport device of item 3, wherein
the transport mechanism
has a movement portion that is movable and that protrudes from the opening to a position above the placement surface, and
transports the specimen rack on the placement surface by movement of the movement portion.

Item 19: The specimen rack transport device of item 3, further comprising
a sensor configured to detect the specimen rack on the placement surface through the opening.

Item 20: The specimen rack transport device of item 1, wherein
the specimen rack holds a specimen container having no cap.

Item 21: The specimen rack transport device of item 3, wherein
the transport mechanism includes a motor, and
the motor is disposed at a position apart from positions below the opening and the gap.

Item 22: A specimen analyzer comprising:
the specimen rack transport device of any one of items 1 to 21; and
a measurement device configured to measure a specimen inside the specimen container on the specimen rack transported by the specimen rack transport device.

Item 23: The specimen analyzer of item 22, wherein,
in the specimen rack transport device, an upper side of at least a portion of the collecting container is opened, and
the measurement device includes a suction nozzle capable of suctioning the specimen at a position above the collecting container.

Item 24: The specimen analyzer of item 22, wherein
the measurement device includes a controller configured to control transport operation that is performed by the specimen rack transport device.

Item 25: A method for collecting a specimen spilled from a specimen container onto a placement surface of a specimen rack transport device comprising a transport mechanism configured to transport, on the placement surface, a specimen rack holding the specimen container, the method comprising:
receiving the specimen by a flow path member;
causing the specimen received by the flow path member to flow toward a collecting container by the flow path member; and
collecting, by the collecting container, the specimen having been caused to flow by the flow path member.

## Claims

1. A specimen rack transport device comprising:
a transport mechanism configured to transport, on a placement surface, a specimen rack holding a specimen container;
a flow path member configured to receive a specimen spilled from the specimen container onto the placement surface and cause the specimen to flow through the flow path member; and
a collecting container configured to collect the specimen having flowed through the flow path member.

2. The specimen rack transport device of claim 1, wherein
the flow path member is at least partially disposed below a periphery of the placement surface and receives the specimen having dropped from the periphery of the placement surface.

3. The specimen rack transport device of claim 1, wherein
the flow path member receives the specimen having passed through: an opening provided in the placement surface or in a raised surface raised with respect to the placement surface; or a gap between the placement surface and the raised surface.

4. The specimen rack transport device of claim 1, further comprising
a housing disposed such that at least one of an opening or a gap is formed between the housing and an edge of the placement surface or a raised surface raised with respect to the placement surface, wherein
the flow path member receives the specimen having passed through at least one of the opening or the gap between the housing and the edge of the placement surface or the raised surface raised with respect to the placement surface.

5. The specimen rack transport device of claim 3, wherein
the flow path member is at least partially disposed below the opening or the gap.

6. The specimen rack transport device of claim 5, further comprising
a housing disposed such that at least one of an opening or a gap is formed between the housing and an edge of the placement surface or the raised surface, wherein
the flow path member receives the specimen having passed through at least one of the opening or the gap between the housing and the edge of the placement surface or the raised surface raised with respect to the placement surface.

7. The specimen rack transport device of claim 1, wherein
the flow path member has a tilted surface that allows the specimen to flow thereon.

8. The specimen rack transport device of claim 1, wherein
the flow path member has, over an entirety of the flow path, a tilt angle of 1 to 10° with respect to a horizontal direction defined as 0°.

9. The specimen rack transport device of claim 3, wherein
a plurality of the openings are provided in the placement surface or the raised surface, and
the flow path member is at least partially disposed below the plurality of the openings.

10. The specimen rack transport device of claim 1, wherein
the flow path member is disposed non-linearly in a plan view.

11. The specimen rack transport device of claim 3, wherein
a lower end of the opening in the raised surface is at a higher position than the placement surface.

12. The specimen rack transport device of claim 1, further comprising
a housing having a side wall portion and a bottom plate and forming at least one of an opening or a gap between the housing and an edge of the placement surface or a raised surface raised with respect to the placement surface, wherein
the bottom plate has an outlet provided at a position thereof corresponding to a downstream end of the flow path member, and
the collecting container is disposed below the outlet provided in the bottom plate.

13. The specimen rack transport device of claim 1, wherein
the collecting container is capable of being drawn out from the specimen rack transport device.

14. The specimen rack transport device of claim 3, wherein
the transport mechanism
has a movement portion that is movable and that protrudes from the opening to a position above the placement surface, and
transports the specimen rack on the placement surface by movement of the movement portion.

15. The specimen rack transport device of claim 3, further comprising
a sensor configured to detect the specimen rack on the placement surface through the opening.

16. The specimen rack transport device of claim 3, wherein
the transport mechanism includes a motor, and
the motor is disposed at a position apart from positions below the opening and the gap.

17. A specimen analyzer comprising:
the specimen rack transport device of any one of claims 1 to 16; and
a measurement device configured to measure a specimen inside the specimen container on the specimen rack transported by the specimen rack transport device.
